# EUROPEAN PATENT SPECIFICATION

(11) **EP 4 440 025 B1**
(45) Date of publication and mention of the grant of the patent: **01.04.2026**
(21) Application number: 24167586.7
(22) Date of filing: 28.03.2024
(51) Int. Cl.: H04L 5/00, H04W 24/08

(54) **COMB-LEVEL SENSING FOR SIDELINK POSITIONING REFERENCE SIGNAL RESOURCE SELECTION**
KAMMEBENENERFASSUNG ZUR AUSWAHL VON SIDELINK-POSITIONIERUNGSREFERENZSIGNALRESSOURCEN
DÉTECTION DE NIVEAU DE PEIGNE POUR SÉLECTION DE RESSOURCES DE SIGNAL DE RÉFÉRENCE DE POSITIONNEMENT DE LIAISON LATÉRALE

(30) Priority: 31.03.2023 US 202363493474 P
(43) Date of publication of application: 02.10.2024
(73) Proprietor: Nokia Technologies Oy, 02610 Espoo (FI)
(72) Inventor: KEATING, Ryan, Chicago, 60622 (US); CHA, Hyun-Su, Chicago, 60601 (US); KESHAVAMURTHY, Prajwal, 81241 Munich (DE)
(74) Representative: Script Intellectual Property LLP

(56) References cited:
- HAO LIN ET AL: "Discussion on resource allocation for SL positioning reference signal", vol. 3GPP RAN 1, no. Athens, GR; 20230227 - 20230303, 17 February 2023 (2023-02-17), XP052247451, Retrieved from the Internet <URL:https://www.3gpp.org/ftp/TSG_RAN/WG1_RL1/TSGR1_112/Docs/R1-2300303.zip R1-2300303_OPPO_Resource allocation.docx> [retrieved on 20230217]
- MOHAMMAD ALAWIEH ET AL: "Considerations on SL-PRS resource allocation", vol. 3GPP RAN 1, no. Athens, GR; 20230227 - 20230303, 17 February 2023 (2023-02-17), XP052248283, Retrieved from the Internet <URL:https://www.3gpp.org/ftp/TSG_RAN/WG1_RL1/TSGR1_112/Docs/R1-2301144.zip R1-2301144.docx> [retrieved on 20230217]

## Description

### TECHNICAL FIELD

An example embodiment of the present disclosure generally relates to communication systems and, more particularly, to dynamically selecting resources for transmitting sidelink (SL) positioning reference signals (PRS) based on a comb-level power sensing technique.

### BACKGROUND

A Radio Access Network (RAN) enables communication sessions between two or more entities such as user equipment (UE), base transceiver stations (hereinafter, "base stations"), Network Functions (NF), and/or other nodes by providing connectivity between the various entities involved in a communication path of a communication system via a radio link. A RAN associated with a communication system may include, for example, a communication network and one or more compatible communication devices. Communication systems continue to evolve to expand network usage, to provide improved security, and/or to provide users with improved network services. For instance, fourth generation (4G) wireless mobile telecommunications technology, also known as Long Term Evolution (LTE) technology, was designed to provide high-capacity mobile multimedia with high data rates particularly for human interaction. Next generation or fifth generation new radio (5G NR) technology is intended to be used not only for human interaction, but also for machine type communications in so-called Internet of Things (IoT) networks.

As 5G NR technology advances, certain communication protocols associated with 5G networks have become crucial areas for optimization and development. For example, establishing wireless sidelink (SL) connections between two or more terminal devices (TDs) (e.g., two or more UEs, smartphones, and/or the like) is a key functionality for executing various operations within a 5G network. It is therefore desirable to have improved methods to efficiently allocate available resources in order to facilitate the communication of two or more terminal devices via a sidelink connection. 3GPP draft R1-2300303 discusses resource allocation for sidelink positioning reference signals. 3GPP draft R1-2301144 discloses considerations on sidelink positioning reference signal resource allocation.

### SUMMARY

Methods, apparatuses, and computer program products are provided in accordance with an example embodiment for providing comb-level sensing for sidelink (SL) positioning reference signal (PRS) resource selection.

In accordance with a first aspect of the present disclosure, an apparatus is provided comprising: means for obtaining a first power measurement associated with one or more resource blocks (RB) being utilized by a terminal device (TD); means for determining whether the first power measurement is equal to or below a first threshold, wherein the first threshold is associated with the one or more RBs; means for transmitting, to a target TD, a PRS via at least a portion of the one or more RBs in response to determining that the first power measurement is equal to or below the first threshold; means for determining a first set of comb parameters in response to determining that the first power measurement is not equal to or below the first threshold; means for obtaining, using the first set of comb parameters, a second power measurement, wherein the second power measurement is performed on one or more resource elements (REs), in the one or more RBs; means for determining whether the second power measurement is equal to or below a second threshold, wherein the second threshold is associated with the one or more REs; and means for transmitting, using the first set of comb parameters, the PRS to the target terminal device via at least a portion of the one or more REs in response to determining that the second power measurement is equal to or below the second threshold.

The apparatus may further comprise: means for determining a second set of comb parameters in response to determining that the second power measurement is not equal to or below the second threshold; means for obtaining, using the second set of comb parameters, a third power measurement, wherein the third power measurement is performed on the one or more REs in the one or more RBs; means for determining whether the third power measurement is equal to or below the second threshold associated with the one or more REs; means for transmitting, using the second set of comb parameters, the PRS to the target TD via at least a portion of the one or more REs in response to determining that the third power measurement is equal to or below the second threshold.

The apparatus may further comprise: means for determining at least one of the first set of comb parameters or the second set of comb parameters based at least in part on one of a random sequence of comb parameter values, a predetermined sequence of comb parameter values, one or more portions of data associated with respective transmissions of one or more different TDs, or a condition of a channel used for transmitting the PRS. The computer-implemented method also includes wherein at least one of the first set of comb parameters or the second set of comb parameters comprise at least one comb size value or comb offset value.

The apparatus may further comprise: means for receiving at least one of the first threshold associated with the one or more RBs or the second threshold associated with the one or more REs from at least one of a network node or one or more different TDs. At least one of the first threshold associated with the one or more RBs or the second threshold associated with the one or more REs may be based in part on one of one or more out-of-coverage operation preferences associated with the TD, one or more computational resources of the TD, or one or more predefined communication protocol specifications.

At least one of the first threshold associated with the one or more RBs or the second threshold associated with the one or more REs may be configured using at least one of: a long term evolution (LTE) positioning protocol (LPP), a system information block, or radio resource control signaling. The apparatus may further comprise: means for receiving at least one of the first threshold associated with the one or more RBs or the second threshold associated with the one or more REs via an SL positioning protocol, an SL radio resource control, or an SL broadcast signal.

The apparatus may further comprise: means for determining a success rate associated with one or more transmissions of the PRS to the target TD. The apparatus may further comprise means for modifying a respective value associated with the first threshold associated with the one or more RBs based on the success rate associated with the one or more transmissions of the PRS to the target TD. The apparatus may further comprise: means for transmitting a modified respective value associated with the first threshold to the network node. The apparatus may further comprise: means for mapping the respective value associated with the first threshold associated with the one or more RBs to the success rate associated with the one or more transmissions of the PRS to the target TD.

At least one of the first, second, or third respective power measurements may be reference signal received power (RSRP) measurements. Determining whether the first power measurement is equal to or below the first threshold associated with the one or more RBs may further comprise means for determining whether the first power measurement is equal to or below a respective value associated with the first threshold associated with the one or more RBs.

Determining whether the second power measurement or the third power measurement is equal to or below the second threshold associated with the one or more REs may further comprise means for determining whether the second power measurement or the third power measurement is equal to or below a respective value associated with the second threshold associated with the one or more REs. The PRS may be an SL PRS. The apparatus may further comprise: means for indicating, to the target TD, an SL PRS configuration before transmitting the PRS to the target TD.

The apparatus may further comprise: means for obtaining a secondary power measurement in response to determining that the first power measurement is not equal to or below the first threshold associated with the one or more RBs but is equal to or below an auxiliary threshold, wherein the auxiliary threshold is also associated with the one or more RBs, wherein the secondary power measurement is performed on one or more REs in the one or more RBs; means for determining whether the secondary power measurement performed on the one or more REs also is equal to or below the auxiliary threshold associated with the one or it more RBs; and means for transmitting the PRS to the target terminal device via at least one of the one or more RBs in response to determining that the secondary power measurement also is equal to or below the auxiliary threshold associated with the one or more RBs.

The apparatus may further comprise: means for determining a plurality of comb parameters in response to determining that the secondary power measurement is not equal to or below the auxiliary threshold associated with the one or more RBs; means for obtaining, using the plurality of comb parameters, a tertiary power measurement, wherein the tertiary power measurement is performed on one or more REs in the one or more RBs; means for determining whether the tertiary power measurement is equal to or below a predefined threshold associated with the one or more REs; and means for transmitting, using the plurality of comb parameters, the PRS to the target terminal device via at least one RE of the one or more REs in response to determining that the tertiary power measurement is equal to or below the predefined threshold. The one or more REs related to the one or more RBs may be randomly chosen.

In accordance with a second aspect of the disclosure, a method is provided comprising: obtaining a first power measurement performed on one or more resource blocks, RBs, being utilized by a terminal device; determining whether the first power measurement is equal to or below a first threshold, wherein the first threshold is associated with the one or more RBs; transmitting, to a target terminal device, a positioning reference signal, PRS, via at least a portion of the one or more RBs in response to determining that the first power measurement is equal to or below the first threshold; determining a first set of comb parameters in response to determining that the first power measurement is not equal to or below the first threshold; obtaining, using the first set of comb parameters, a second power measurement, wherein the second power measurement is performed on one or more resource elements, REs, in the one or more RBs; determining, whether the second power measurement is equal to or below a second threshold, wherein the second threshold is associated with the one or more REs; and transmitting, using the first set of comb parameters, the PRS to the target terminal device via at least a portion of the one or more REs in response to determining that the second power measurement is equal to or below the second threshold.

The above summary is provided merely for the purpose of summarizing some example embodiments to provide a basic understanding of some aspects of the present disclosure. It will be appreciated that the scope of the present disclosure encompasses many potential embodiments in addition to those here summarized, some of which will be further described below. Other features, aspects, and advantages of the subject will become apparent from the description, the drawings, and the claims.

### BRIEF DESCRIPTION OF THE DRAWINGS

Having thus described certain example embodiments in general terms, reference will now be made to the accompanying drawings, which are not necessarily drawn to scale, and wherein:
FIG. 1 is a block diagram of a communication system configured in accordance with one or more example embodiments of the present disclosure;
FIG. 2 is a block diagram of an apparatus that can be configured to provide comb-level sensing for sidelink (SL) positioning reference signal (PRS) resource selection in accordance with one or more example embodiments of the present disclosure;
FIG. 3 illustrates a resource block (RB) that can be associated with one or more terminal devices (TDs) in accordance with one or more example embodiments of the present disclosure;
FIG. 4 illustrates another RB that can be associated with one or more TDs in accordance with one or more example embodiments of the present disclosure;
FIG. 5 illustrates a flowchart depicting a method for dynamically selecting resources for transmitting SL PRSs based on a comb-level power sensing technique in accordance with one or more example embodiments of the present disclosure;
FIG(s). 6A-B illustrate another flowchart depicting a method for determining various thresholds to facilitate the dynamic selection of resources used in transmitting SL PRSs based on a comb-level power sensing technique in accordance with one or more example embodiments of the present disclosure; and

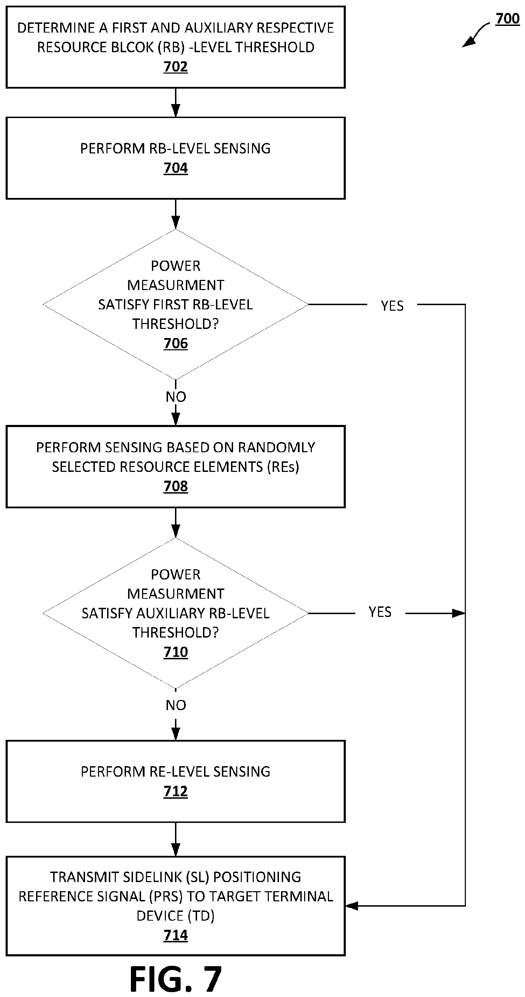

FIG. 7 illustrates a flowchart depicting a method for employing two RB-level thresholds to facilitate the dynamic selection of resources used in transmitting SL PRSs in accordance with one or more example embodiments of the present disclosure.

### DETAILED DESCRIPTION

Some embodiments of the present disclosure will now be described more fully hereinafter with reference to the accompanying drawings, in which some, but not all, embodiments of the present disclosure are shown. Indeed, various embodiments of the present disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As defined herein, a "computer-readable storage medium," which refers to a physical storage medium (e.g., volatile, or non-volatile memory device), may be differentiated from a "computer-readable transmission medium," which refers to an electromagnetic signal.

Third generation partnership project (3GPP) 5th generation (5G) technology is a next generation of radio systems and network architecture that can deliver extreme broadband and ultra-robust, low latency connectivity. 5G technology improves a variety of telecommunication services offered to the end users and supports massive broadband that delivers gigabytes of bandwidth per second on demand for the uplink and downlink transmissions. As one example, next generation communication systems may be configured to use virtualized RAN functions and core network functions. As another example, next generation systems may use a Service Based Architecture (SBA), e.g., a system architecture in which the system functionality is achieved using a set of Network Functions (NFs) providing services to other NFs authorized to access their services. The 5G network may be configured to support NFs via a Network Repository Function (NRF). For example, an NRF may be configured to maintain a list of available NFs to facilitate service registration and/or discovery in an instance in which a user equipment (UE) attempts to access one or more services provided by one or more network devices.

Example communication systems, frameworks, and/or associated techniques of the present disclosure may be configured to provide comb-level sensing for sidelink (SL) positioning reference signal (PRS) resource selection. It should be understood that the present disclosure is not limited to the particular types of communication systems and/or processes disclosed. For example, although illustrated in the context of wireless cellular systems utilizing 3GPP system elements such as a 3GPP next generation core network, the disclosed embodiments can be adapted in a straightforward manner to a variety of other types of communication systems. Additionally, while the present disclosure may describe certain embodiments in conjunction with a 5G communications system, other embodiments also apply to and comprise other networks and network technologies, such as 3G, 4G, Long Tenn Evolution (LTE), 6G, etc., without limitation.

In accordance with an illustrative embodiment implemented in a 5G communication system environment, one or more 3GPP standards, specifications, and/or protocols provide further explanation of user equipment and core network elements/entities/functions and/or operations performed by the user equipment and the core network elements/entities/functions, e.g., the 3GPP System Aspects (SA) Working Group 5 (3GPP SA5), the 3GPP RAN 3. Other 3GPP standards, specifications and/or protocols provide other conventional details that one of ordinary skill in the art will realize. However, while illustrative embodiments are well-suited for implementation associated with the above-mentioned 3GPP standards, alternative embodiments are not necessarily intended to be limited to any particular standards.

A sidelink (SL) is a primary networking interface in a modern 5G communication system environment. SL connections enable two or more terminal devices (TDs) (e.g., two or more UEs, smartphones, computing devices, and/or the like) to communicate directly without relying on a base station (e.g., a gNB). SL connections enable many benefits including the use of SL connections for determining and/or refining a position of one or more TDs (e.g., one or more TDs embodied by or carried by a vehicle) in the real world environment. TD positioning techniques have become a meaningful consideration in the telecommunication industry especially, for example, in potentially hazardous or remote scenarios in which there is limited network coverage available to the one or more TDs.

SL-based positioning is similar to traditional UE positioning, sometimes referred to as Uu-based positioning, in that both SL-based positioning and Uu-based positioning utilize positioning reference signals (PRSs). However, in some contexts, rather than relying on a base station (e.g., a gNB) as a reference point for determining the position of a particular TD, two or more TDs can connect via SL and utilize SL PRSs to facilitate positioning. SL PRSs can be used in many round trip time (RTT) -type positioning techniques including, but not limited to, time-based techniques such as time difference of arrival (TDOA), and/or angle-based techniques that use angle of arrival (AoA).

In various SL contexts, one or more TDs known as "anchor" TDs can transmit and/or receive SL PRSs in order to determine and/or refine the position of one or more "target" TDs. An anchor TD can be understood to be a stationary or mobile TD for which the accurate coordinate location of the TD is known. Non-limiting examples of anchor TDs can be TDs that are fixed at regular intervals alongside a roadway (e.g., roadside units (RSUs) stationed along a public highway) or TDs installed at specific locations in a building (e.g., an airport). As described herein, anchor TDs can also be mobile TDs (e.g., a smartphone) whose coordinate positions are accurately known and can be confirmed, for example, by one or more satellite positioning techniques (e.g., GPS). In contrast, target TDs can generally be understood as TDs for which an accurate coordinate position is unknown and/or can be improved.

An SL PRS should support a comb pattern such that multiple SL PRSs can be transmitted on the same orthogonal frequency division multiplexing (OFDM) symbols associated with a resource block (RB) while not interfering with each other. This is critical to many positioning techniques (e.g., TDOA) which rely on multiple SL PRS being transmitted and received simultaneously. However, legacy SL sensing operations make it difficult to see how the resource allocation for SL PRS will enable this type of comb-level resource selection. For the purposes of determining a position of a particular target TD, the comb-type resource element (RE) pattern across multiple OFDM symbols is beneficial for timing measurement since the comb-type RE pattern does not lead to a repetition of the time-domain received signals. As such, a particular anchor TD does not need all REs on each OFDM symbol of an SL RB to transmit an SL PRS.

Traditional sensing techniques configured to determine available resources for a given RB utilize measurement values such as the physical SL shared channel (PSSCH) reference signal received power (RSRP) (PSSCH-RSRP) and the physical SL control channel (PSCCH) -RSRP. PSSCH-RSRP and PSCCH-RSRP represent the linear averages over the power contributions of one or more REs associated with the given RB and are based on measurements which evaluate the average power (e.g., in watts) across all the REs within a given bandwidth. Because such traditional sensing techniques rely on the aforementioned linear averages of the power contributions of the one or more REs, one or more unused REs may be overlooked during the process and therefore some REs may be under-utilized. Said differently, even if some REs are not occupied, measurements such as the PSSCH-RSRP and the PSCCH-RSRP may tell the TD that some parts of the channel (e.g., one or more REs associated with a particular sub-carrier frequency) are unavailable. There is currently no method to allow the TD to perform RE-level sensing to determine if a given comb-offset would be possible in some channel conditions and/or if utilizing the comb-offset would allow the TD to utilize unused REs in a given RB.

An example embodiment of the present disclosure provides a method for a multi-step sensing method to enable comb-level (e.g., RE-level) SL PRS resource selection. As mentioned herein, an anchor TD can initialize and/or a facilitate an SL positioning session with one or more target TDs. As such, the anchor TD must determine which resources to use for transmitting the one or more SL PRSs to the one or more target TDs. In various embodiments, an anchor TD is preconfigured with one or more thresholds associated with one or more RBs in a given subchannel associated with the two or more TDs engaged in the SL positioning session. Additionally or alternatively, in various embodiments, the one or more thresholds can be configured based in part on an RSRP threshold defined by one or more 3GPP protocols. In various embodiments, the one or more thresholds can be associated with a particular granularity of the available resources to be used by the anchor TD and/or the one or more target TDs. For example, the one or more thresholds can be an RB-level threshold associated with the one or more RBs in the given subchannel. Additionally or alternatively, the one or more thresholds can be RE-level thresholds associated with one or more REs comprised and/or embodied by the one or more respective RBs. For example, an RB-level threshold can be defined for a particular group of RBs within a particular subchannel. As another example, in various other embodiments, an RB-level threshold can be defined based in part on one or more RBs comprised within a contiguous set of RBs that spans across one or more subchannels.

Furthermore, in various embodiments, the one or more thresholds (e.g., the RB-level threshold and/or an RE-level threshold) can be provided by the 5G network to the anchor TD by, for example, a location management function (LMF) or a gNB by means of one or more LPP protocols, system information blocks (SIBs), and/or radio resource control (RRC) signaling. The one or more thresholds (e.g., an RB-level threshold, RE-level threshold, and/or the like) can also be provided by another anchor TD (e.g. a serving TD) by means of, for example, a supervised-learning-based spatial performance prediction (SLPP) protocol, SL RRC signaling, and/or SL broadcast signaling. Furthermore, the one or more thresholds may be preconfigured in the anchor TD (or in a target TD) in particular for out-of-coverage operations in which the 5G network coverage is limited or absent. The one or more thresholds may also be hard-coded in one or more protocol specifications (e.g., 3GPP specifications) and/or hardware specifications related to a particular anchor TD (or a particular target TD) such that the respective threshold values are specified directly and/or are based on one or more computational capabilities of the anchor TD. Similarly, the set of RBs associated with the anchor TD and the one or more target TDs can also be preconfigured (e.g., based on a 3GPP protocol). Additionally or alternatively, in various embodiments, the set of RBs can be configured by a higher layer of the 5G network architecture such as, for example, the RRC layer or medium access control (MAC) layer of a particular 5G network.

In various embodiments, "satisfying" a particular threshold (e.g., an RB-level threshold, RE-level threshold, and/or the like) means that the received power is equal to, or below, the particular threshold. However, it will be appreciated that various embodiments of the present disclosure can be configured such that the satisfaction of a particular threshold (e.g., an RB-level threshold, RE-level threshold, and/or the like) can mean that a respective measured value (e.g., the received power) is equal to, or above, the particular threshold. However, the definition of how a particular threshold is satisfied (e.g., a respective value being equal to, above, or below the particular threshold) can be differently configured to best suit various respective embodiments of the present disclosure.

In a first step of the multi-step sensing method described herein, an anchor TD performs sensing on a set of RBs and determines if the received power satisfies a first threshold (e.g., an RB-level threshold). If the anchor TD determines that the received (e.g., sensed) power (e.g., SL PRS-RSRP) satisfies (e.g., is equal to, or below) the first threshold associated with a sub-set of RBs of the set of RBs, the anchor TD may use that sub-set of RBs for transmitting the SL PRS to a target TD. However, if the anchor TD determines that the received (e.g., sensed) power (e.g., SL PRS-RSRP) does not satisfy (e.g., is above) the first threshold for at least some of the RBs in the set of RBs, the anchor TD can proceed to a secondary step of the multi-step sensing method described herein. The anchor TD can perform sensing on a set of REs within the set of RBs by using a predetermined set of comb parameters. In various embodiments, the set of comb parameters comprises at least one of a comb size and/or a comb offset. The comb size can be understood as an integer value *N* related to a grouping of REs within an RB. The comb offset can be understood as an integer value ranging from {0, ..., *N*-1}. In various embodiments, the values of the comb size and comb offset can be dynamically set by the anchor TD (e.g., a comb size of 4 and a comb offset of 0).

In various embodiments, the anchor TD is preconfigured with a second threshold. In various embodiments, the second threshold can be associated with one or more REs associated with the set of RBs. In such embodiments, if the anchor TD determines that the received power (e.g., RE-level RSRP) satisfies (e.g., is equal to, or below) the second threshold (e.g., an RE-level threshold)for a given set of comb parameters (e.g., a predetermined comb size and comb offset), the anchor TD uses, based on the comb parameters, the REs associated with the RE-level RSRP that satisfy the second threshold for transmitting the SL PRS to the target TD.

However, if the anchor TD determines that the received (e.g., sensed) power (e.g., the RE-level RSRP) does not satisfy (e.g., is above) the second threshold (e.g., the RE-level threshold) for a given set of comb parameters, the anchor TD may perform RE-level sensing again with a different set of comb parameters. For example, if an anchor TD performs RE-level sensing with a first set of comb parameters (e.g., a comb size value of *N*=4 and a comb offset value of 0) and determines that the received power (e.g., the RE-level RSRP) does not satisfy the second threshold (e.g., the RE-level threshold) the anchor TD can determine a second set of comb parameters (e.g., a comb size value of *N*=4 and a comb offset value of 1). The anchor TD can then perform RE-level sensing again using the second set of comb parameters. As such, the anchor TD can repeatedly perform RE-level sensing until a preferred set of comb parameters and a preferred set of REs is determined for transmitting the SL PRS to the target TD.

The anchor TD can use any data related to other anchor TD transmissions (e.g., determined via SL control information (SCI) decoding) to determine if a particular set of comb parameters should be avoided. For example, the anchor TD may use prior data associated with prior activity on the channel associated with the set of RBs in order to determine a preferred value of the comb size. For instance, in some contexts, a larger comb size may provide a better chance to find an available RE.

Additionally or alternatively, the anchor TD can determine the set of comb parameters based on a pre-determined sequence by, for example, executing RE-level sensing using a first set of comb parameters with a respective comb size value of *N*=4 and a comb offset value of 3, and then executing RE-level sensing using a second set of comb parameters with a respective comb size value of *N*=4 and a comb offset value of 1.

Additionally or alternatively, in various embodiments, the anchor TD can randomly determine the set of comb parameters used for the RE-level sensing. For example, the anchor TD may select multiple comb sizes and/or comb offsets and then identify the comb resources (e.g., one or more REs) for which the received power (e.g., RE-level RSRP) satisfies the second threshold. The anchor TD can randomly choose one of the identified comb resources (e.g., an RE of the one or more REs) for transmitting the SL PRS to the target TD. Additionally or alternatively, in various embodiments, the target TD can determine a particular set of comb parameters for the anchor TD to use for RE-level sensing.

In various embodiments, the anchor TD continues using the aforementioned multi-step sensing method until the appropriate resources are identified (e.g., one or more RBs and/or one or more respective REs associated with the one or more RBs) and then transmits an SL PRS to the target TD accordingly. It will be appreciated that even though the maximum number of comb parameter configurations is bounded by the comb size associated with a particular resource pool related to the RBs (e.g., as defined by the RRC layer or MAC layer), one or more operations comprised in the multi-step sensing method described herein can be iterated and/or repeated by the anchor TD until the appropriate resources are determined.

In various embodiments, an anchor TD may dynamically adjust the value of a respective threshold (e.g., an RB-level threshold) based on a determined transmission success rate associated with one or more transmissions of an SL PRS to a target TD, where success in this context can mean that the target TD successfully received and decoded the SL PRS transmitted by the anchor TD. For example, the anchor TD can modify a respective value associated with the first threshold (e.g., an RB-level threshold) based on the determined transmission success rate associated with the one or more transmissions of the PRS to the target TD. In this regard, various embodiments can define a transmission success rate threshold with which to compare the determined transmission success rate associated with the one or more transmissions of the PRS to the target TD. If the anchor TD determines that a transmission success rate associated with the one or more transmissions of the PRS to the target TD does not satisfy the transmission success rate threshold, the anchor TD can modify the respective value associated with the first threshold.

In one or more embodiments, the transmission success rate can be determined based in part on RF interference and/or one or more resource conflicts (e.g., usage conflicts with one or more REs associated with the one or more RBs). Additionally or alternatively, the transmission success rate can be determined in part by hybrid automatic repeat request (HARQ) negative acknowledgment (NACK) feedback associated with the transmission of one or more portions of data (e.g., one or more SL PRSs) to a particular target TD. By employing the HARQ NACK technique, the anchor TD can log, store, and/or otherwise keep track of how many transmissions (e.g., retransmissions) were necessary for the target TD to successfully receive and decode one or more portions of data (e.g., the SL PRS) transmitted by the anchor TD. Additionally or alternatively, in various embodiments, the anchor TD can log, store, and/or otherwise keep track of the number of NACKs the anchor TD received from the target TD regarding the one or more portions of data transmitted by the anchor TD. Additionally or alternatively, in various embodiments, the anchor TD can determine a ratio of acknowledgements (ACKs) to NACKs received from the target TD based on the one or more portions of data transmitted by the anchor TD. As such, in various embodiments, the anchor TD can determine the transmission success rate based on at least one of the number of transmissions (e.g., retransmissions) sent to the target TD, the number of NACKs received from the target TD, or the ratio of ACKs/NACKs received from the target TD.

In a scenario in which a transmission success rate of one or more SL PRS transmissions is determined not to satisfy the transmission success rate threshold (e.g., by means of HARQ NACK feedback), the anchor TD may lower a respective value associated with the first threshold (e.g., the RB-level threshold). In doing so, only a few RBs which have a low RB-level RSRP relative to one or more other RBs will be considered as vacant (e.g., available for use) and, as such, more RBs will be analyzed during RE-level sensing. Lowering the first threshold in this scenario results in a higher number of RBs being analyzed during RE-level sensing (and therefore adding to the complexity of the sensing) but ensures a higher SL PRS transmission reliability.

Alternatively, in a scenario in which a transmission success rate of one or more SL PRS transmissions is determined to satisfy the transmission success rate threshold (e.g., by means of HARQ NACK feedback), the anchor TD may increase a respective value associated with the first threshold (e.g., the RB-level threshold). In doing so, the anchor TD may consider more RBs as vacant (e.g., available for use). Increasing the first threshold in this scenario results in a lower number of RBs being analyzed during RE-level sensing (and therefore reduces the complexity of the sensing).

Additionally or alternatively, in various embodiments, an anchor TD may dynamically adjust the value of a respective threshold based on an SL channel busy ratio (CBR) and/or a current density of one or more anchor and/or target TDs in a particular location. For example, in a scenario in which an anchor TD detects a high SL CBR, the anchor TD may lower the first threshold (e.g., the RB-level threshold) to allow more RE-level evaluation.

In one or more embodiments, an anchor TD may be preconfigured with a range of respective threshold types (e.g., a range of RB-level thresholds and/or a range of RE-level thresholds) associated with different respective values. As such, the anchor TD can be configured to select a respective threshold (e.g., an RB-level threshold and/or an RE-level threshold) from the preconfigured ranges of the respective threshold types autonomously. For example, the anchor TD can automatically select a first threshold configured as an RB-level threshold and/or a second threshold configured as an RE-level threshold from the preconfigured ranges of the respective threshold types based on, for example, an SL PRS transmission success rate, an SL CBR, and/or a current density of one or more anchor and/or target TDs in a particular location.

Furthermore, in various embodiments, the anchor TD can be configured by the 5G network (e.g. via the LMF) and/or another TD (e.g. a serving TD) to map one or more thresholds (e.g., one or more RB-level thresholds) to one or more respective SL PRS transmission success rates. For example, as the anchor TD executes the one or more aforementioned dynamic threshold value adjustments, the anchor TD can map the one or more threshold values (e.g., associated to one or more respective RB-level thresholds) to one or more respective SL PRS transmission success rates in an interactive table, array, data store, and/or the like.

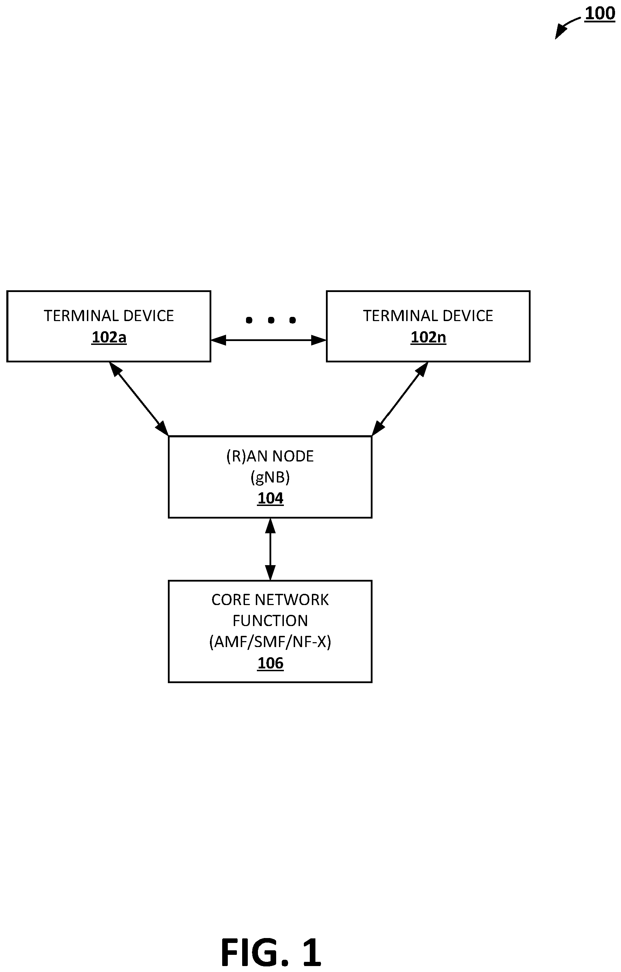

FIG. 1 illustrates a communication system 100 configured in accordance with at least some embodiments of the present disclosure. However, it is to be appreciated that embodiments are not limited to the network configurations illustrated herein or otherwise described below. It is to be understood that the elements shown in communication system 100 are intended to represent a primary function provided within the system. As such, the blocks shown in FIG. 1 reference specific elements in 5G networks that provide the primary functions. However, other network elements may be used to implement some or all of the primary functions represented. Also, it is to be understood that not all functions of a 5G network are depicted in FIG. 1. Rather, functions that facilitate an explanation of illustrative embodiments are represented.

By way of example, the communication system 100 may be deployed within a radio access architecture. However, the system may be deployed in other applications including within other communication networks including, for example, LTE advanced (LTE-A), a universal mobile telecommunications system (UMTS) radio access network (UTRAN or E-UTRAN), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof. Any access network eligible to access the 5G core network such as an untrusted Non 3GPP access terminated at a Non-3GPP interworking function (N3IWF), a trusted Non-3GPP access terminated at a trusted non-3GPP gateway function (TNGF) or a Wireline access terminated at a wireless access gateway function (W-AGF) may be used instead of the NG RAN/gNB. Moreover, although described herein in conjunction with a 5G core network, the method, apparatus and computer program product of certain example embodiments may be employed in conjunction with other technologies, such as a 6G network or the like.

One or more TDs 102a-n can be configured to be in a wireless connection on one or more communication channels in a cell with a radio access network (RAN) node, such as a gNB. The physical link from a TD 102a to a gNB is called the uplink or reverse link and the physical link from the gNB to the TD 102a is called the downlink or forward link. It should be appreciated that the gNBs, or their functionalities may be implemented by using any node, host, server or access point (AP) or other entity suitable for such a usage. Furthermore, one or more TDs 102a-n can be configured to be in a wireless connection to one or more other TDs 102a-n such as, for example, via an SL channel.

A communications system typically comprises more than one gNB, in which case the gNBs may also be configured to communicate with one another over links, wired or wireless, designed for the purpose. These links may be used for signaling purposes. The gNB is a computing device configured to control the radio resources of the communication system to which the gNB is coupled. The gNB may also be referred to as a base station, an access point or any other type of interfacing device including a relay station capable of operating in a wireless environment. The gNB includes or is coupled to one or more transceiver(s). From the transceivers of the gNB, a connection is provided to an antenna unit that establishes bi-directional radio links to TDs. As such, the transceivers of the gNB and the transceivers of the TDs may include transmitters and receivers configured to communicate via a channel. Although reference is made to a gNB herein, this is by way of example, but not of limitation, as other types of AN nodes may alternatively be employed.

Accordingly, as shown, the communication system 100 comprises one or more TDs 102a-n that communicate, such as via an air interface, with a AN node 104. In some embodiments, the AN node 104 is a RAN node. The one or more TDs 102a-n may be a mobile station, and such a mobile station may comprise, by way of example, a mobile telephone, a computer, or any other type of communication device. The terms "terminal device (TD)," "user device," or "user equipment (UE)" as used herein are therefore intended to be construed broadly, so as to encompass a variety of different types of mobile stations, subscriber stations or, more generally, communication devices, including examples such as a combination of a data card inserted in a laptop or other equipment.

The one or more TDs 102a-n may also refer to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a TD may also be a nearly exclusive uplink only device, of which an example is a camera or video camera loading images or video clips to a network. A TD may also be a device having the capability to operate in an IoT network, which is a scenario in which objects are provided with the ability to transfer data over a network without requiring human-to-human or human-to-computer interaction. The TD (or in some embodiments a layer 3 relay node) is configured to perform one or more user device functionalities. The TD may also be called a subscriber unit, mobile station, remote terminal, access terminal, user terminal or user equipment just to mention but a few names or apparatuses.

In one embodiment, one or more TDs 102a-n are comprised of a Universal Integrated Circuit Card (UICC) and Mobile Equipment (ME). The UICC is the user-dependent part of the UE and contains at least one Universal Subscriber Identity Module (USIM) and appropriate application software. The USIM securely stores the International Mobile Subscriber Identity (IMSI) number and its related key, which are used to identify and authenticate subscribers to access networks. The ME is the user-independent part of the UE and contains terminal equipment (TE) functions and various mobile termination (MT) functions.

As described herein, in various SL contexts, one or more TDs 102a-n can be configured as anchor TDs. Anchor TDs can transmit and/or receive SL PRSs in order to determine and/or refine the position of one or more TDs 102a-n configured as target TDs. An anchor TD can be understood to be a stationary or mobile TD for which the accurate coordinate location of the TD is known. Non-limiting examples of anchor TDs can be TDs that are fixed at regular intervals alongside a roadway (e.g., a public highway) or TDs installed at specific locations in a building (e.g., an airport). As described herein, anchor TDs can also be mobile TDs (e.g., a smartphone) whose coordinate positions are accurately known and can be confirmed, for example, by one or more satellite positioning techniques (e.g., GPS). In contrast, target TDs can generally be understood as TDs for which an accurate coordinate position is unknown and/or can be improved.

The AN node 104 is illustratively part of a RAN of the communication system 100. In a 5GS network, the AN node 104 is typically implemented by an gNB. Such an access network may comprise, for example, a plurality of base stations which may include one or more gNBs (which may also be split in a centralized unit (CU) and a distributed unit (DU) part) and/or other AN node types, such as evolved node Bs (eNBs), node Bs, base stations (BS) and/or N3IWF, or any other types of access nodes such as WLAN access points, as well as one or more associated radio network control functions. The base stations and radio network control functions may be logically separate entities, but in a given embodiment may be implemented in the same physical network element, such as, for example, a base station router or femto cellular access point. As will be appreciated by one of skill in the art, any variety of AN nodes and/or access nodes may also implement similar operations, functions, etc.

In some example embodiments, the AN node 104 is operatively coupled to a core network function 106, such as via an NG interface. The core network function 106 may include an access and mobility management function (AMF), session management function (SMF), representative network function (NF-X), or any of core network function. A core network function 106 may be an element of the core network (CN) part of the communication system 100 that is responsible for one or more associated operations.

5G enables using multiple input, multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G has multiple radio interfaces, e.g., below 6GHz or above 24 GHz, cmWave and mmWave, and is integrable with existing legacy radio access technologies, such as the LTE. Integration with the LTE may be implemented as a system where macro coverage is provided by the LTE and 5G radio interface access comes from small cells by aggregation to the LTE. In other words, 5G can support both inter-RAT operability (such as LTE-5G) and inter-RI operability (inter-radio interface operability, such as below 6GHz - cmWave, 6 or above 24 GHz - cmWave and mmWave).

The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications, etc.).

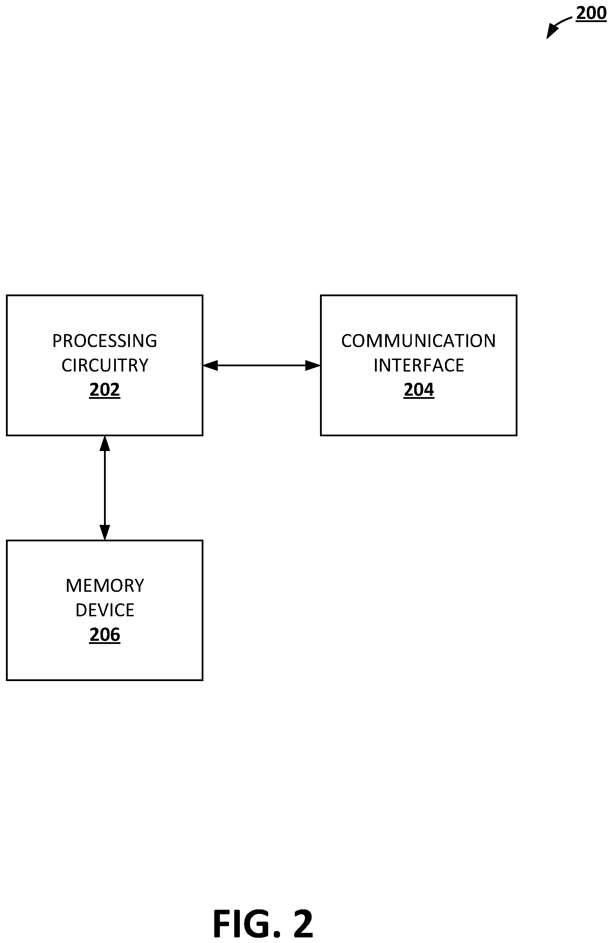

FIG. 2 illustrates an example of an apparatus 200 that may be configured to function as, or may be embodied by, a network entity, such as a TD 102a, UE, AN node 104, AMF, SMF and/or NF-X. As shown in FIG. 2, the apparatus 200 includes, is associated with or is in communication with processing circuitry 202, a memory device 206, and a communication interface 204. The processing circuitry 202 may be in communication with the memory device via a bus for passing information among components of the apparatus 200. The memory device 206 may be non-transitory and may include, for example, one or more volatile and/or non-volatile memories. In other words, for example, the memory device 206 may be an electronic storage device (e.g., a computer readable storage medium) comprising gates configured to store data (e.g., bits) that may be retrievable by a machine (e.g., a computing device like the processing circuitry). The memory device 206 may be configured to store information, data, content, applications, instructions, or the like for enabling the apparatus to carry out various functions in accordance with an example embodiment of the present disclosure. For example, the memory device 206 could be configured to buffer input data for processing by the processing circuitry 202. Additionally or alternatively, the memory device 206 could be configured to store instructions for execution by the processing circuitry 202.

The apparatus 200 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment on a single chip or as a single "system on a chip." As such, in some cases, a chip or chipset may constitute means for performing one or more operations for providing the functionalities described herein.

The processing circuitry 202 may be embodied in a number of different ways. For example, the processing circuitry 202 may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 202 may be configured to execute instructions stored in the memory device 206 or otherwise accessible to the processing circuitry 202. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry 202 is embodied as an executor of instructions, the instructions may specifically configure the processor to perform the algorithms and/or operations described herein when the instructions are executed. However, in some cases, the processing circuitry 202 may be a processor of a specific device (e.g., an image or video processing system) configured to employ an embodiment of the present disclosure by further configuration of the processing circuitry by instructions for performing the algorithms and/or operations described herein. The processing circuitry 202 may include, among other things, a clock, an arithmetic logic unit (ALU) and logic gates configured to support operation of the processing circuitry.

The communication interface 204 may be any means such as a device or circuitry embodied in either hardware or a combination of hardware and software that is configured to receive and/or transmit data from/to a network and/or any other device (e.g., a particular TD 102a, UE, and/or the like) or module in communication with the apparatus. In this regard, the communication interface 204 may include, for example, an antenna (or multiple antennas) and supporting hardware and/or software for enabling communications with a wireless communication network. Additionally, the communication interface 204 can embody and/or integrate with one or more RF and/or wireless transceivers, where each wireless transceiver includes a transmitter to transmit signals and a receiver to receive signals. The one or more RF and/or wireless transceivers can be configured for facilitating communication on a 4G/LTE network, a 5G network, and/or the like. Additionally, the one or more RF and/or wireless transceivers can be configured for facilitating communication on various respective communication networks. The one or more RF and/or wireless transceivers receive signals or data and/or transmit or send signals and/or data.
In various embodiments, processing circuitry 202 can control the antenna(s) and/or the one or more RF and/or wireless transceivers to receive, send, broadcast, or transmit signals and/or data. Additionally or alternatively, the communication interface 204 may include the circuitry for interacting with the antenna(s) and/or the one or more RF and/or wireless transceivers to cause transmission of signals via the antenna(s) or to handle receipt of signals received via the antenna(s). Additionally or alternatively, in some environments, the communication interface 204 may support wired communication. As such, for example, the communication interface may include a communication modem and/or other hardware/software for supporting communication via cable, digital subscriber line (DSL), universal serial bus (USB) or other mechanisms.

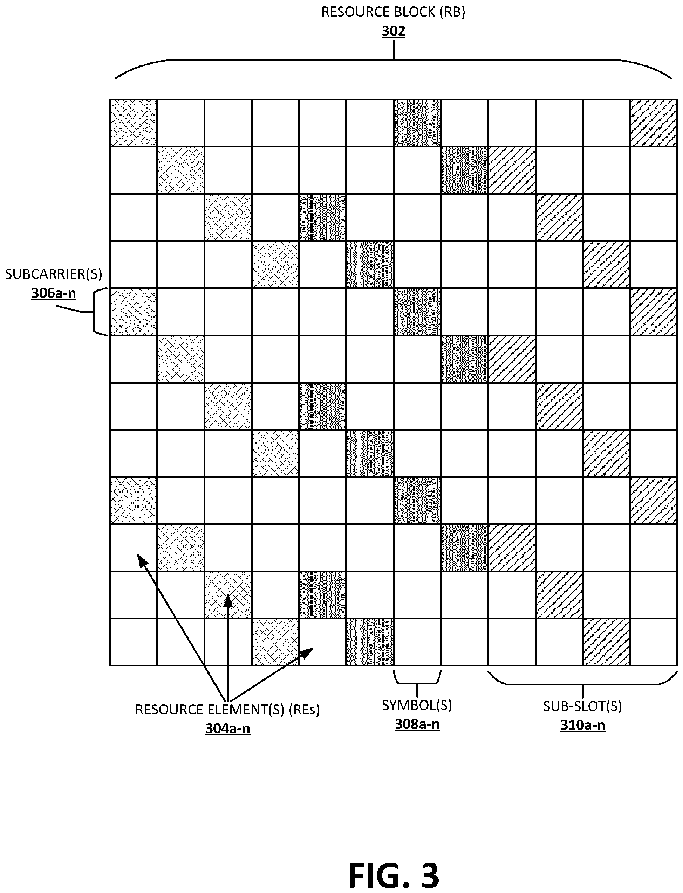

FIG. 3 illustrates an RB 302 that can be associated with one or more TDs 102a-n in accordance with one or more example embodiments of the present disclosure. The RB 302 comprises multiple REs 304an, multiple subcarriers 306a-n, multiple symbols 308a-n (e.g., OFDM symbols), and multiple sub-slots 310an. An RB 302 can be understood as the smallest amount of resources that can be allocated to a TD 102a, such as, for example, the smallest amount of resources allocated by a gNB or, in the case of an SL channel connection, the smallest amount of resources allocated by a second TD 102b.

Each subcarrier 306a-n represents a specific frequency range within the RB 302, and each symbol 308a-n (e.g., an OFDM symbol) represents a specific range of time within a single sub-slot 310a. For example, a single sub-slot 310a can be a specific unit of time (e.g., 0.5ms) and a single symbol 308a associated with the sub-slot 310a can represent a fraction of time within the symbol 308a. For example purposes, the RB 302 illustrated in FIG. 3 shows that a single sub-slot 310a comprises four symbols 308a-n. A single RE 304a can be understood as the smallest discrete portion of an RB 302 (e.g., one subcarrier 306a by one symbol 308a). As shown, an RE 304a that has been allocated (e.g., is currently being used for transmitting or receiving a signal) is depicted as shaded. Accordingly, REs 304a-n that are not shaded can be understood to be unallocated and therefore usable, for example, by a TD 102a configured as an anchor TD for transmitting an SL PRS to a TD 102b configured as a target TD.

FIG. 3 illustrates an example of a common problem that occurs while using traditional sensing techniques configured to determine available resources (e.g., unused REs 304a-n) for a given RB 302. Traditional sensing techniques utilize averaged measurement values such as PSSCH-RSRP and PSCCH-RSRP which represent the linear averages over the power contributions of one or more REs 304a-n associated with a given RB 302. PSSCH-RSRP and PSCCH-RSRP values are based on measurements which evaluate the average power (e.g., in watts) across all the REs 304a-n within a given bandwidth associated with the RB 302. By using such traditional sensing techniques and averaged measurement values, an anchor TD (e.g., TD 102a) may determine that some parts of the SL channel (e.g., one or more REs 304a-n associated with a particular subcarrier 306a) are unavailable even if some of the REs 304a-n are unoccupied.

For example, FIG. 3 illustrates three SL PRSs configured with a comb size of four (4) which are received by a target TD (e.g., TD 102d) from three different anchor TDs (e.g., TDs 102a-c). As shown, the three SL PRSs transmitted by the three respective anchor TDs (e.g., TDs 102a-c) are depicted in different shading patterns and, as further shown, the three SL PRSs take up three respective sub-slots 310a-n. In a scenario in which the three respective anchor TDs (e.g., TDs 102a-c) are close to the target TD (e.g., the TD 104d), the target TD (e.g., the TD 104d) may determine (e.g., by using traditional sensing techniques) that the entire slot comprising the sub-slots 310a-n associated with the SL PRSs is occupied. However, as depicted, there are in fact many REs 304a-n open for the target UE to select from. As such, by using traditional sensing techniques that utilize averaged measurement values such as PSSCH-RSRP and PSCCH-RSRP, the target TD (e.g., the TD 102d) may falsely determine there are no available resources with which to respond to the SL PRSs transmitted by the respective anchor TDs (e.g., TDs 102a-c).

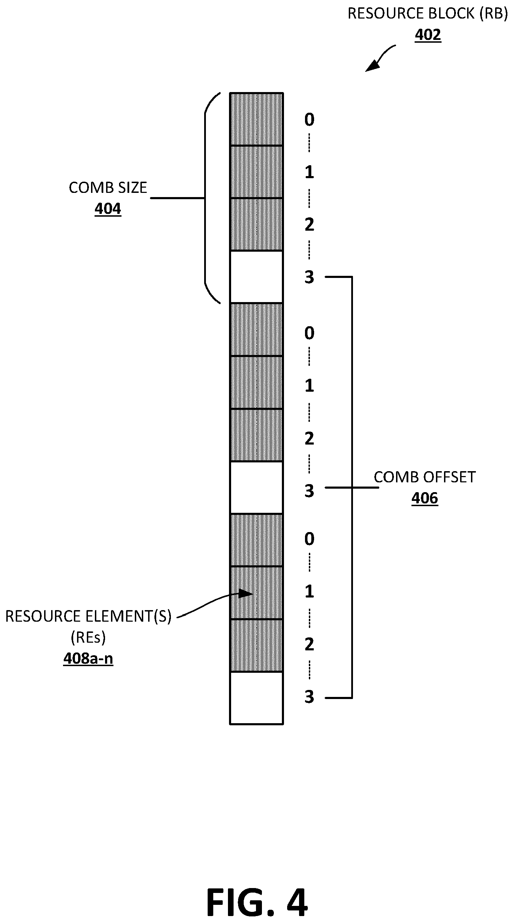

FIG. 4 illustrates another RB that can be associated with one or more TDs in accordance with one or more example embodiments of the present disclosure. Specifically, FIG. 4 illustrates various concepts related to the multi-step sensing method described herein as the concepts relate to an RB 402. As shown, the REs 408a-n highlighted by the shading pattern indicate that those particular REs 408a-n are currently being utilized by one or more TDs 102a-n.

As described herein, an anchor TD (e.g., a TD 102a) can perform various sensing techniques based on various predetermined thresholds, namely the RB-level threshold and the RE-level threshold defined herein. In the example depicted in FIG. 4, if the anchor TD (e.g., TD 102a) first performed sensing on the RB 402 based on a first threshold configured as an RB-level threshold, the anchor TD would determine that the received (e.g., sensed) power (e.g., SL PRS-RSRP) is above the first threshold for the RB 402.

In this example, the anchor TD would proceed to perform multiple iterations of RE-level sensing using a predetermined set of comb parameters defining a comb size 404 and a comb offset 406. For example, the anchor TD (e.g., TD 102a) would perform RE-level sensing iterations with a comb size (e.g., comb size 404) with a value *N* = 4 and a comb offset (e.g., comb offset 406) with values {0, ..., *N*-1}. As a result of performing the RE-level sensing iteration in which the comb offset value was equal to three (3), the anchor TD would determine that the RE-level RSRP is less than a second threshold configured as an RE-level threshold and, accordingly, that multiple REs 408a-n were in fact available for use. As such, the anchor TD (e.g., TD 102a) would determine use the comb parameters with a comb size value *N* = 4 and a comb offset value equal to three (3) for transmitting an SL PRS to a target TD (e.g., TD 102b).

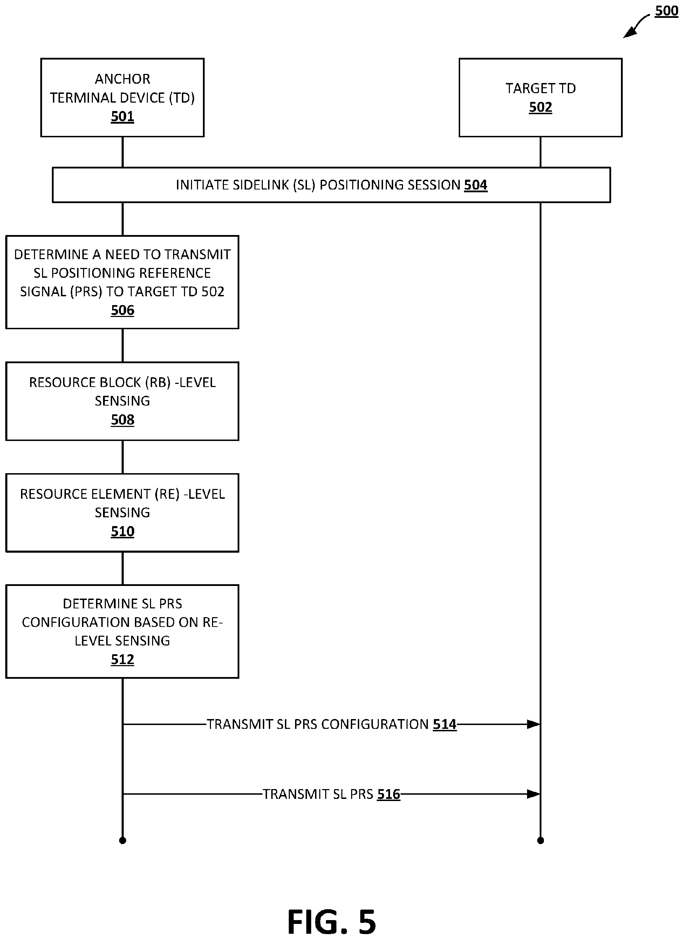

FIG. 5 illustrates a flowchart depicting a method 500 for dynamically selecting resources for transmitting SL PRSs based on a comb-level power sensing technique in accordance with one or more example embodiments of the present disclosure. The method 500 can be implemented, for example, by one or more components of an apparatus 200 embodied by an anchor TD 501. Although described herein in the context of the anchor TD 501, other apparatuses, such as a particular target TD 502, a particular UE, a particular computing device (e.g., smartphone, laptop, tablet computer) and/or the like associated with and/or in communication with the apparatus 200, may be configured to perform the method 500 with the reference to the components of the apparatus 200 again being provided by way of example but not of limitation.

As shown at operation 504 of FIG. 5, an apparatus 200 embodied by the anchor TD 501 includes means, such as the processing circuitry 202, at least one processor, communication interface 204, at least one memory device 206, and/or the like, configured to initiate an SL positioning session with the target TD 502 by establishing an SL channel connection. In various embodiments, the anchor TD 501 may initiate an SL positioning session with the target TD 502 automatically when the target TD 502 enters a predefined range associated with the anchor TD 501. For example, in a scenario in which multiple anchor TDs 501 are placed throughout a large commercial building (e.g., an airport), a particular anchor TD 501 may automatically initiate an SL positioning session with a particular target TD 502 that travels through, and/or proximate to, a predefined range associated with the particular anchor TD 501. In such a scenario, the target TD 502 may be a smartphone associated with an end user walking through the commercial building. In various other embodiments, the target TD 502 may initiate the SL positioning session by, for example, transmitting a request to one or more nearby anchor TDs 501 to facilitate one or more positioning techniques to determine and/or refine the current respective location of the target TD 502.

As shown at operation 506, the apparatus 200 embodied by the anchor TD 501 includes means, such as the processing circuitry 202, at least one processor, communication interface 204, at least one memory device 206, and/or the like, configured to determine a need to send one or more SL PRSs to the target TD 502. For example, in some scenarios, an anchor TD 501 may determine that 5G network coverage has dropped, is limited, and/or is absent for a particular geographical location which could potentially result in a hazardous situation related to the target TD 502. As a non-limiting example, an anchor TD 501 may determine that 5G network coverage is limited or absent inside a tunnel in which the target TD 502 (e.g., embodied by a vehicle) is travelling through. As a result, the positioning accuracy related to the target TD 502 may suffer and adversely impact one or more other related services associated with the target TD 502 (e.g., navigational services, velocity monitoring services, and/or the like). Accordingly, the anchor TD 501 can determine the need to send the one or more SL PRSs to the target TD 502 in order to facilitate the correction and/or refinement of the positioning related to the target TD 502.

In various embodiments, the anchor TD 501 and the target TD 502 can determine and/or configure one or more power measurement thresholds associated with the SL positioning session. For example, the anchor TD 501 and the target TD 502 can determine (e.g., agree upon) a common RB-level threshold and/or a common RE-level threshold. For example, in a circumstance in which the anchor TD 501 and the target TD 502 are preconfigured with differing values associated with an RB-level threshold and/or an RE-level threshold, the anchor TD 501 can determine the preferred values for the RB-level threshold and/or the RE-level threshold.

In various embodiments, the anchor TD 501 and/or the target TD 502 is preconfigured with a first threshold (e.g., an RB-level threshold) associated with one or more RBs (e.g., one or more RBs 402) in a given subchannel associated with the anchor TD 501 and the target TD 502 engaged in the SL positioning session. Additionally or alternatively, in various embodiments, the first threshold can be configured based in part on an RSRP threshold defined by one or more 3GPP protocols. For example, the first threshold can be defined for a particular group of RBs (e.g., two or more RBs 402) within a particular subchannel. In various other embodiments, the first threshold can be defined based in part on one or more RBs comprised within a contiguous set of RBs that spans across one or more subchannels. Furthermore, in various embodiments, the anchor TD 501 is preconfigured with a second threshold (e.g., an RE-level) threshold associated with one or more REs (e.g., REs 408a-n) associated with the set of RBs (e.g., one or more RBs 402).

As shown at operation 508, the apparatus 200 embodied by the anchor TD 501includes means, such as the processing circuitry 202, at least one processor, communication interface 204, at least one memory device 206, and/or the like, configured to perform RB-level sensing related to the target TD 502. For example, the anchor TD 501 performs sensing on a set of RBs (e.g., one or more RBs 402) and determines if the received power satisfies (e.g., is equal to, or below) the first threshold. In some embodiments, the set of RBs (e.g., the one or more RBs 402) can be preconfigured (e.g., based on a 3GPP protocol). Additionally or alternatively, the set of RBs (e.g., the one or more RBs 402) can be configured by a higher layer of the 5G network architecture such as, for example, the RRC layer or MAC layer of a particular 5G network. If the anchor TD 501 determines that the received (e.g., sensed) power (e.g., SL PRS-RSRP) satisfies (e.g., is equal to, or below) the first threshold for a sub-set of RBs of the set of RBs (e.g., the one or more RBs 402), the anchor TD 501 can use that sub-set of RBs for transmitting the SL PRS to the target TD 502. However, if the anchor TD 501 determines that the received (e.g., sensed) power (e.g., SL PRS-RSRP) does not satisfy (e.g., is above) the first threshold for at least some of the RBs in the set of RBs (e.g., the one or more RBs 402), the anchor TD can proceed to operation 510 of the method 500.

As shown at operation 510, the apparatus 200 embodied by the anchor TD 501 includes means, such as the processing circuitry 202, at least one processor, communication interface 204, at least one memory device 206, and/or the like, configured to perform RE-level sensing related to the target TD 502. For example, the anchor TD 501 can perform sensing on a set of REs (e.g., the REs 408a-n) within the set of RBs (e.g., the one or more RBs 402) by using a predetermined set of comb parameters. As described herein, the set of comb parameters comprises at least one of a comb size and/or a comb offset. The comb size can be understood as an integer value *N* related to a grouping of REs within an RB. The comb offset can be understood as an integer value ranging from {0, ..., *N*-1}. In various embodiments, the values of the comb size and comb offset can be dynamically set by the anchor TD 501. If the anchor TD 501 determines that the received power (e.g., RE-level RSRP) satisfies (e.g., is equal to, or below) the second threshold (e.g., an RE-level threshold) for a given set of comb parameters (e.g., a predetermined comb size and comb offset), the anchor TD 501 can use, based on the set of comb parameters, the REs (e.g., the REs 408a-n) associated with the RE-level RSRP that satisfy the second threshold for transmitting the SL PRS to the target TD 502.

However, if the anchor TD 501 determines that the received (e.g., sensed) power (e.g., the RE-level RSRP) does not satisfy (e.g., is above) the second threshold for a given set of comb parameters, the anchor TD 501 can perform RE-level sensing again with a different set of comb parameters. For example, if the anchor TD 501 performs RE-level sensing with a first set of comb parameters (e.g., a comb size value of *N*=4 and a comb offset value of 0) and determines that the received power (e.g., the RE-level RSRP) does not satisfy (e.g., is above) the second threshold, the anchor TD 501 can determine a second set of comb parameters (e.g., a comb size value of *N*=4 and a comb offset value of 1). The anchor TD 501 can then perform RE-level sensing again using the second set of comb parameters. As such, the anchor TD 501 can repeatedly perform RE-level sensing until a preferred set of comb parameters and a preferred set of REs (e.g., one or more of the REs 408a-n) is determined for transmitting the SL PRS to the target TD 502.

As shown at operation 512, the apparatus 200 embodied by the anchor TD 501 includes means, such as the processing circuitry 202, at least one processor, at least one memory device 206, and/or the like, configured to determine an SL PRS configuration based on the RE-level sensing. For example, the anchor TD 501 can determine an SL PRS configuration that matches that of the preferred set of comb parameters determined in operation 510 of the method 500. Additionally or alternatively, in various embodiments, the anchor TD 501 can use any data related to other anchor TD transmissions (e.g., determined via SL control information (SCI) decoding) to determine if a particular set of comb parameters should be avoided and, as such, a respective SL PRS configuration should be avoided as well. For example, the anchor TD 501 may use prior data associated with prior activity on the channel associated with the set of RBs (e.g., the one or more RBs 402) in order to determine a preferred value of the comb size. For instance, in some contexts, a larger comb size may provide a better chance to find an available RE (e.g., a particular RE 408a of the REs 408a-n).

Additionally or alternatively, the anchor TD 501 can determine the SL PRS configuration based on a set of comb parameters related to a pre-determined sequence by, for example, executing RE-level sensing using a first set of comb parameters with a respective comb size value of *N*=4 and a comb offset value of 3, and then executing RE-level sensing using a second set of comb parameters with a respective comb size value of *N*=4 and a comb offset value of 1. Additionally or alternatively, in various embodiments, the anchor TD 501 can randomly determine the set of comb parameters used for the RE-level sensing. For example, the anchor TD 501 may select multiple comb sizes and/or comb offsets and then identify the comb resources (e.g., one or more REs of the REs 408a-n) for which the received power (e.g., RE-level RSRP) satisfies (e.g., is equal to, or below) the second threshold (e.g., the RE-level threshold). The anchor TD 501 can randomly choose one of the identified comb resources (e.g., an RE 408a of the one or more REs 408a-n) for transmitting the SL PRS to the target TD 502. As such, the anchor TD 501 can determine, based on one or more of the aforementioned techniques for determining the set of comb parameters, the preferred SL PRS configuration for transmitting the SL PRS to the target TD 502.

As shown at operation 514, the apparatus 200 embodied by the anchor TD 501 includes means, such as the processing circuitry 202, at least one processor, communication interface 204, at least one memory device 206, and/or the like, configured to transmit, via the SL channel connection, the preferred SL PRS configuration to the target TD 502. For example, the anchor TD 501 can transmit the SL PRS configuration determined at operation 512 to the target TD 502. As such, the target TD 502 can, if necessary, reconfigure one or more components (e.g., associated with an apparatus 200 embodied by the target TD 502) in preparation for receiving the SL PRS from the anchor TD 501.

As shown at operation 516, the apparatus 200 embodied by the anchor TD 501 includes means, such as the processing circuitry 202, at least one processor, communication interface 204, at least one memory device 206, and/or the like, configured to transmit, via the SL channel connection, the SL PRS to the target TD 502.

FIG(s). 6A-B illustrate a flowchart depicting a method 600 for determining various thresholds to facilitate the dynamic selection of resources used in transmitting SL PRSs based on a comb-level power sensing technique in accordance with one or more example embodiments of the present disclosure. The method 600 can be implemented, for example, by one or more components of an apparatus 200 embodied by a TD 102a. Although described herein in the context of the TD 102a, other apparatuses, such as a particular anchor TD 501, a particular target TD 502, a particular UE, a particular computing device (e.g., smartphone, laptop, tablet computer) and/or the like associated with and/or in communication with the apparatus 200, may be configured to perform the method 600 with the reference to the components of the apparatus 200 again being provided by way of example but not of limitation.

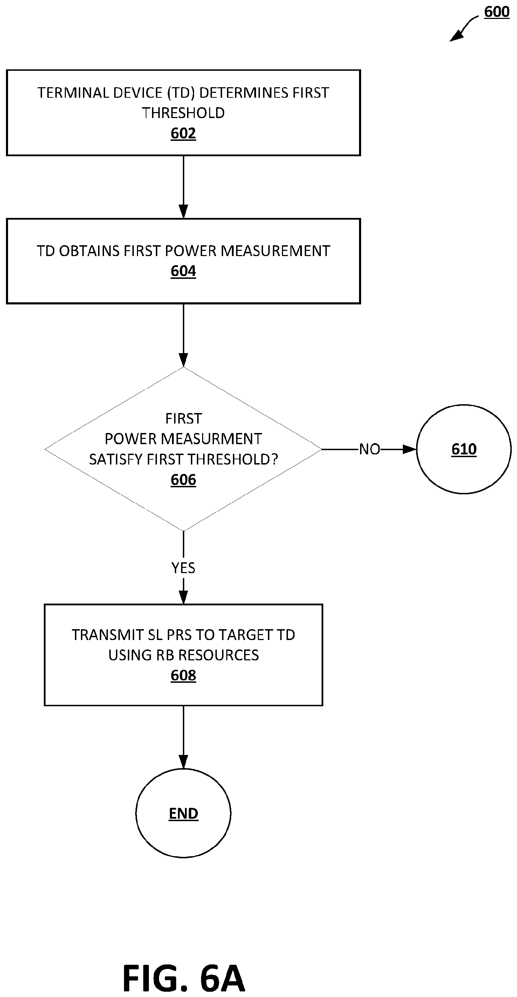

As shown in block 602 of FIG. 6A, an apparatus 200 embodied by the TD 102a includes means, such as the processing circuitry 202, at least one processor, communication interface 204, at least one memory device 206, and/or the like, configured to determine a first threshold (e.g., an RB-level threshold). For example, in various embodiments, an anchor TD (e.g., TD 102a) and/or a target TD (e.g., TD 102b) is preconfigured with a first threshold configured as an RB-level sensing threshold associated with one or more RBs (e.g., one or more RBs 402) in a given subchannel associated with the anchor TD and the target TD engaged in the SL positioning session. Additionally or alternatively, in various embodiments, the first threshold can be configured based in part on an RSRP threshold defined by one or more 3GPP protocols. For example, the first threshold can be defined for a particular group of RBs (e.g., two or more RBs 402) within a particular subchannel. In various other embodiments, the first threshold can be defined based in part on one or more RBs comprised within a contiguous set of RBs that spans across one or more subchannels.

Furthermore, in various embodiments, the first threshold (e.g., the RB-level threshold) can be provided by the 5G network to the anchor TD (e.g., the TD 102a) by, for example, an LMF or a gNB by means of one or more LPP protocols, SIBs and/or RRC signaling. The first threshold can also be provided by another anchor TD (e.g. a serving TD) by means of, for example, an SLPP protocol, SL RRC signaling, and/or SL broadcast signaling. Furthermore, the first threshold may be preconfigured in the anchor TD (or in a target TD) in particular for out-of-coverage operations in which the 5G network coverage is limited or absent. The first threshold may also be hard-coded in one or more protocol specifications (e.g., 3GPP specifications) and/or hardware specifications related to a particular anchor TD (or a particular target TD) such that the threshold values are specified directly and/or are based on one or more computational capabilities of the anchor TD.

As shown in block 604, the apparatus 200 embodied by the TD 102a includes means, such as the processing circuitry 202, the least one processor, communication interface 204, at least one memory device 206, and/or the like, configured to obtain a first power measurement (e.g., an RB-level power measurement). For example, the anchor TD (e.g., the TD 102a) performs sensing on a set of RBs (e.g., one or more RBs 402) and determines if the received power (e.g., RB-level RSRP) satisfies (e.g., is equal to, or below) the first threshold (e.g., the RB-level threshold). In some embodiments, the set of RBs (e.g., the one or more RBs 402) can be preconfigured (e.g., based on a 3GPP protocol). Additionally or alternatively, the set of RBs (e.g., the one or more RBs 402) can be configured by a higher layer of the 5G network architecture such as, for example, the RRC layer or MAC layer of a particular 5G network.

As shown in block 606, the apparatus 200 embodied by the TD 102a includes means, such as the processing circuitry 202, at least one processor, at least one memory device 206, and/or the like, configured to determine whether the first power measurement satisfies the predetermined first threshold (e.g., the RB-level threshold). For example, if the anchor TD (e.g., the TD 102a) determines that the first power measurement (e.g., the RB-level RSRP) satisfies (e.g., is equal to, or below) the first threshold for a sub-set of RBs of the set of RBs (e.g., the one or more RBs 402), then the method 600 can proceed to block 608. However, if the anchor TD (e.g., the TD 102a) determines that the first power measurement (e.g., RB-level RSRP) does not satisfy (e.g., is above) the first threshold for at least some of the RBs in the set of RBs (e.g., the one or more RBs 402), the method 600 can proceed to block 610.

As shown in block 608, the apparatus 200 embodied by the TD 102a includes means, such as the processing circuitry 202, at least one processor, communication interface 204, at least one memory device 206, and/or the like, configured to transmit an SL PRS to the target TD using the RB resources (e.g., the RB resources determined by the operations of block 604). For example, if the anchor TD (e.g., the TD 102a) previously determined that the first power measurement (e.g., RB-level RSRP) satisfies (e.g., is equal to, or below) the first threshold (e.g., the RB-level threshold) for a sub-set of RBs of the set of RBs (e.g., the one or more RBs 402), the anchor TD (e.g., the TD 102a) can use that sub-set of RBs for transmitting the SL PRS to the target TD (e.g., the TD 102b).

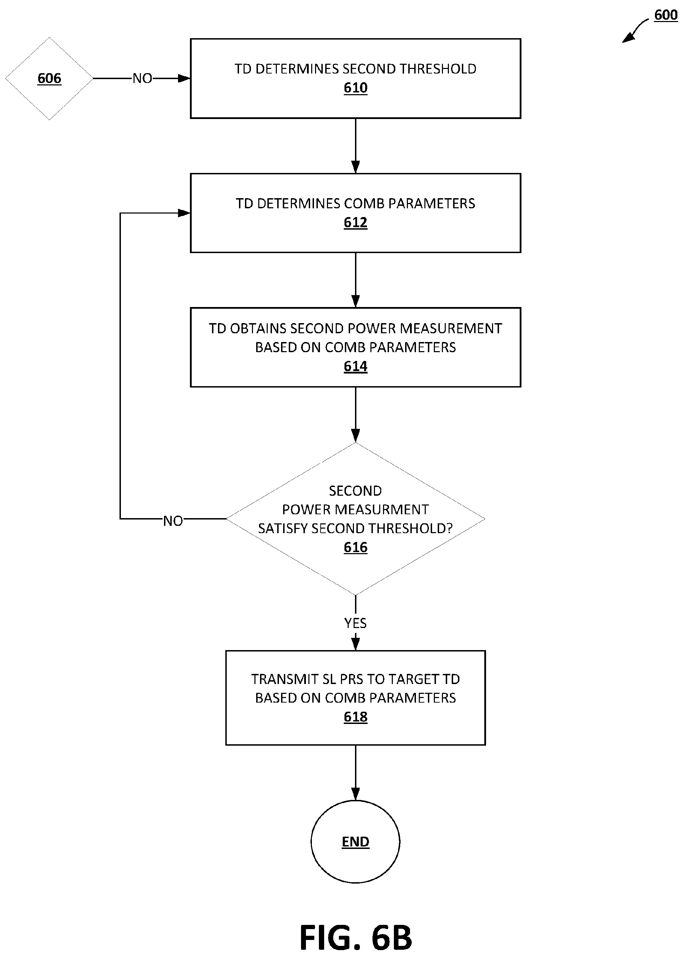

As shown in block 610 of FIG. 6B, the apparatus 200 embodied by the TD 102a includes means, such as the processing circuitry 202, at least one processor, communication interface 204, at least one memory device 206, and/or the like, configured to determine a second threshold (e.g., an RE-level threshold). As described herein, in various embodiments, the anchor TD (e.g., the TD 102a) can be preconfigured with a second threshold configured as an RE-level threshold associated with one or more REs (e.g., REs 408a-n) associated with the set of RBs (e.g., one or more RBs 402). Additionally or alternatively, in various embodiments, the second threshold can be provided by the 5G network to the anchor TD (e.g., the TD 102a) by, for example, an LMF or a gNB by means of one or more LPP protocols, SIBs and/or RRC signaling. The second threshold can also be provided by another anchor TD (e.g. a serving TD) by means of, for example, an SLPP protocol, SL RRC signaling, and/or SL broadcast signaling. Furthermore, the second threshold may be preconfigured in the anchor TD (or in a target TD) in particular for out-of-coverage operations in which the 5G network coverage is limited or absent. The second threshold may also be hard-coded in one or more protocol specifications (e.g., 3GPP specifications) and/or hardware specifications related to a particular anchor TD (or a particular target TD) such that the threshold values are specified directly and/or are based on one or more computational capabilities of the anchor TD.

As shown in block 612, the apparatus 200 embodied by the TD 102a includes means, such as the processing circuitry 202, at least one processor, at least one memory device 206, and/or the like, configured to determine one or more comb parameters. As described herein, the set of comb parameters comprises at least one of a comb size and/or a comb offset. The comb size can be understood as an integer value *N* related to a grouping of REs within an RB. The comb offset can be understood as an integer value ranging from {0, ..., *N-*1}. In various embodiments, the values of the comb size and comb offset can be dynamically set by the anchor TD (e.g., the TD 102a).

For example, the anchor TD (e.g., the TD 102a) can use any data related to other anchor TD transmissions (e.g., determined via SL control information (SCI) decoding) to determine if a particular set of comb parameters should be avoided. For example, the anchor TD (e.g., the TD 102a) may use prior data associated with prior activity on the channel associated with the set of RBs (e.g., one or more RBs 402) in order to determine a preferred value of the comb size. For instance, in some contexts, a larger comb size may provide a better chance to find an available RE (e.g., an RE 408a).

Additionally or alternatively, the anchor TD (e.g., the TD 102a) can determine the set of comb parameters based on a pre-determined sequence by, for example, executing RE-level sensing using a first set of comb parameters with a respective comb size value of *N*=4 and a comb offset value of 3, and then executing RE-level sensing using a second set of comb parameters with a respective comb size value of *N*=4 and a comb offset value of 1.

Additionally or alternatively, in various embodiments, the anchor TD (e.g., the TD 102a) can randomly determine the set of comb parameters used for the RE-level sensing. For example, the anchor TD may select multiple comb sizes and/or comb offsets and then identify the comb resources (e.g., one or more REs 408a-n) for which the received power (e.g., RE-level RSRP) satisfies (e.g., is equal to, or below) the second threshold (e.g., the RE-level threshold). The anchor TD (e.g., the TD 102a) can randomly choose one of the identified comb resources (e.g., an RE 408a of the one or more REs 408a-n) for transmitting the SL PRS to the target TD (e.g., the TD 102b). Additionally or alternatively, in various embodiments, the target TD (e.g., the TD 102b) can determine a particular set of comb parameters for the anchor TD (e.g., the TD 102a) to use for RE-level sensing.

As shown in block 614, the apparatus 200 embodied by the TD 102a includes means, such as the processing circuitry 202, at least one processor, communication interface 204, at least one memory device 206, and/or the like, configured to obtain a second power measurement (e.g., an RE-level power measurement) based on the predetermined comb parameters. For example, the anchor TD (e.g., the TD 102a) can perform sensing on a set of REs (e.g., the REs 408a-n) within the set of RBs (e.g., the one or more RBs 402) by using a predetermined set of comb parameters in order to obtain a corresponding RE-level RSRP.

As shown in block 616, the apparatus 200 embodied by the TD 102a includes means, such as the processing circuitry 202, at least one processor, at least one memory device 206, and/or the like, configured to determine whether the second power measurement satisfies (e.g., is equal to, or below) the predetermined second threshold (e.g., the RE-level threshold). If the anchor TD (e.g., the TD 102a) determines that the received power (e.g., RE-level RSRP) satisfies the second threshold for a given set of comb parameters (e.g., the predetermined comb size and comb offset), the anchor TD (e.g., the TD 102a), then the method 600 can proceed to block 618.

However, if the anchor TD (e.g., the TD 102a) determines that the received (e.g., sensed) power (e.g., the RE-level RSRP) does not satisfy the second threshold for a given set of comb parameters, then the method 600 can revert back to block 612 so that the anchor TD may perform RE-level sensing again with a different set of comb parameters. For example, if an anchor TD performs RE-level sensing with a first set of comb parameters (e.g., a comb size value of *N*=4 and a comb offset value of 0) and determines that the received power (e.g., the RE-level RSRP) is above the second threshold, the anchor TD can determine a second set of comb parameters (e.g., a comb size value of *N*=4 and a comb offset value of 1). The anchor TD can then perform RE-level sensing again using the second set of comb parameters. As such, the anchor TD can repeatedly perform RE-level sensing until a preferred set of comb parameters and a preferred set of REs is determined for transmitting the SL PRS to the target TD.

As shown in block 618, the apparatus 200 embodied by the TD 102a includes means, such as the processing circuitry 202, at least one processor, communication interface 204, at least one memory device 206, and/or the like, configured to transmit an SL PRS to the target TD based on an SL PRS configuration constructed based on the predetermined comb parameters. For example, if the anchor TD (e.g., the TD 102a) determines that the received power (e.g., RE-level RSRP) satisfies, e.g., is below, the second threshold (e.g., the RE-level threshold) for a given set of comb parameters (e.g., the predetermined comb size and comb offset), the anchor TD (e.g., the TD 102a) can generate an SL PRS configuration based on the given set of comb parameters. As such, based on the SL PRS configuration, the anchor TD (e.g., the TD 102a) can use the REs (e.g., the REs 408a-n) associated with the RE-level RSRP that satisfy (e.g., is equal to, or below) the second threshold for transmitting the SL PRS to the target TD 502.

FIG. 7 illustrates a flowchart depicting a method 700 for employing two thresholds configured as two respective RB-level thresholds to facilitate the dynamic selection of resources used in transmitting SL PRSs in accordance with one or more example embodiments of the present disclosure. The method 700 can be implemented, for example, by one or more components of an apparatus 200 embodied by a TD 102a. Although described herein in the context of the TD 102a, other apparatuses, such as a particular anchor TD 501, a particular target TD 502, a particular UE, a particular computing device (e.g., smartphone, laptop, tablet computer) and/or the like associated with and/or in communication with the apparatus 200, may be configured to perform the method 700 with the reference to the components of the apparatus 200 again being provided by way of example but not of limitation.

Circumstances can arise in which there is a particular RB (e.g., RB 402) with only one (or a few) dominant comb patterns (e.g., only one or a few REs associated with the particular RB are being used). For example, a first anchor TD (e.g. a TD 102a) may be in close proximity to a second anchor TD (e.g., a TD 102b) that is using the particular RB with a certain comb offset such that the majority of the REs associated with the RB are vacant (e.g., unused). The first anchor TD may measure that the RB-level RSRP satisfies (e.g., is below) a first threshold (e.g., an RB-level threshold) even though there is a potentially conflicting SL PRS transmission in that particular RB. As such, the first anchor TD may determine that the particular RB is vacant and may use a particular set of comb parameters for transmitting an SL PRS in that particular RB, thus potentially causing a resource conflict with a second anchor TD. To avoid this potential issue, in various embodiments, an anchor TD (e.g., the first anchor TD) can use two RB-level thresholds instead of one.

As shown in block 702, the apparatus 200 embodied by the TD 102a includes means, such as the processing circuitry 202, the least one processor, communication interface 204, at least one memory device 206, and/or the like, configured to determine a first and second (e.g., an auxiliary) respective RB-level threshold. For example, the first anchor TD (e.g. the TD 102a) can determine a first threshold value for a first RB-level threshold, and a second threshold value for a second (e.g., auxiliary) RB-level threshold. As described herein, the first and/or second respective RB-level thresholds can be configured based in part on an RSRP threshold defined by one or more 3GPP protocols. For example, the first and/or second RB-level thresholds can be defined for a particular group of RBs (e.g., two or more RBs 402) within a particular subchannel. In various other embodiments, the first and/or second respective RB-level thresholds threshold can be defined based in part on one or more RBs comprised within a contiguous set of RBs that spans across one or more subchannels.

Furthermore, in various embodiments, the first and/or second respective RB-level thresholds can be provided by the 5G network to the anchor TD (e.g., the TD 102a) by, for example, an LMF or a gNB by means of one or more LPP protocols, SIBs and/or RRC signaling. The first and/or second respective RB-level thresholds can also be provided by another anchor TD (e.g. a serving TD) by means of, for example, an SLPP protocol, SL RRC signaling, and/or SL broadcast signaling. Furthermore, the first and/or second respective RB-level thresholds may be preconfigured in the anchor TD (or in a target TD) in particular for out-of-coverage operations in which the 5G network coverage is limited or absent. The first and/or second respective RB-level thresholds may also be hard-coded in one or more protocol specifications (e.g., 3GPP specifications) and/or hardware specifications related to a particular anchor TD (or a particular target TD) such that the threshold values are specified directly and/or are based on one or more computational capabilities of the anchor TD.

As shown in block 704, the apparatus 200 embodied by the TD 102a includes means, such as the processing circuitry 202, the least one processor, communication interface 204, at least one memory device 206, and/or the like, configured to perform RB-level sensing to obtain a first power measurement. For example, the first anchor TD (e.g., the TD 102a) performs sensing on the particular RB (e.g., the RB currently being used by the second anchor TD) and determines if the received power (e.g., RB-level RSRP) satisfies (e.g., is equal to, or above) the first and/or second respective RB-level thresholds. In some embodiments, the particular RB can be preconfigured (e.g., based on a 3GPP protocol). Additionally or alternatively, the particular RB can be configured by a higher layer of the 5G network architecture such as, for example, the RRC layer or MAC layer of a particular 5G network.

As shown in block 706, the apparatus 200 embodied by the TD 102a includes means, such as the processing circuitry 202, the least one processor, at least one memory device 206, and/or the like, configured to determine whether the first power measurement (e.g., the RB-level RSRP) satisfies (e.g., is equal to, or below) the first RB-level threshold. If the first power measurement does indeed satisfy the first RB-level threshold, the method 700 can proceed to block 714. However, if the first power measurement does not satisfy the first RB-level threshold, the method 700 can proceed to block 708.

As shown in block 708, the apparatus 200 embodied by the TD 102a includes means, such as the processing circuitry 202, the least one processor, communication interface 204, at least one memory device 206, and/or the like, configured to perform sensing based on randomly selected REs. For example, if while performing RB-level sensing in the particular RB (e.g., the RB currently being used by the second anchor TD), the first anchor TD determines that the RB-level RSRP is in between the first RB-level threshold and the second (e.g., auxiliary) RB-level threshold, the first anchor TD can randomly select a few REs in the particular RB and measure the RSRP in order to obtain a secondary power measurement. The secondary power measurement associated with the randomly selected REs is an additional power measurement to the first power measurement used to confirm whether the particular RB is indeed vacant (e.g., has adequate available REs) in order to avoid causing a potential resource conflict. In some embodiments, the secondary power measurement taken of the randomly selected REs can be an averaged measurement of the power contributions across all the randomly selected REs.

As shown in block 710, the apparatus 200 embodied by the TD 102a includes means, such as the processing circuitry 202, the least one processor, at least one memory device 206, and/or the like, configured to determine whether the secondary power measurement (e.g., the RSRP associated with the randomly selected REs) satisfies (e.g., is equal to, or below) the second (e.g., auxiliary) RB-level threshold. If the first anchor TD determines that the RSRP of the randomly selected REs satisfies the second (e.g., auxiliary) RB-level threshold, the first anchor TD can determine that the particular RB is has vacancies (e.g., unused REs) that can be used for transmitting an SL PRS to a target TD and the method 700 can proceed to block 714.

However, if the first anchor TD determines that the secondary power measurement comprising the RSRP of the randomly selected REs does not satisfy (e.g., is above) the second (e.g., auxiliary) RB-level threshold, the first anchor TD can determine that the particular RB is non-vacant and the method 700 can proceed to block 712 so that the first anchor TD can execute further RE-level sensing by evaluating a preconfigured RE-level threshold (e.g., rather than the first and second respective RB-level thresholds) to determine a preferred set of comb parameters for transmitting the SL PRS to the target TD.

As shown in block 712, the apparatus 200 embodied by the TD 102a includes means, such as the processing circuitry 202, the least one processor, communication interface 204, at least one memory device 206, and/or the like, configured to perform RE-level sensing. For example, the first anchor TD can perform RE-level sensing on the particular RB (e.g., the RB currently being used by the second anchor TD). In various embodiments, the first anchor TD (e.g., the TD 120a) can perform sensing on a set of REs within the particular RB by using a predetermined set of comb parameters (e.g., comb size and comb offset) to obtain a tertiary power measurement. If the first anchor TD determines that the tertiary power measurement (e.g., the RE-level RSRP) satisfies (e.g., is equal to, or below) a predefined RE-level threshold for the given set of comb parameters (e.g., the predetermined comb size and comb offset), the first anchor TD can use, based on the set of comb parameters, the REs associated with the RE-level RSRP that satisfy the predefined RE-level threshold for transmitting an SL PRS to a target TD.

Similar to the embodiments that only use one RB-level threshold, if the anchor TD determines that the tertiary power measurement (e.g., the RE-level RSRP) does not satisfy (e.g., is above) the predefined RE-level threshold for a given set of comb parameters, the anchor TD may perform RE-level sensing again with a different set of comb parameters. For example, if an anchor TD performs RE-level sensing with a first set of comb parameters (e.g., a comb size value of *N*=4 and a comb offset value of 0) and determines that the tertiary power measurement (e.g., the RE-level RSRP) does not satisfy the predefined RE-level threshold, the anchor TD can determine a second set of comb parameters (e.g., a comb size value of *N*=4 and a comb offset value of 1). The anchor TD can then perform RE-level sensing again using the second set of comb parameters and, as such, can reevaluate the tertiary power measurement. As such, the anchor TD can repeatedly perform RE-level sensing until a preferred set of comb parameters and a preferred set of REs is determined for transmitting the SL PRS to the target TD.

As shown in block 714, the apparatus 200 embodied by the TD 102a includes means, such as the processing circuitry 202, the least one processor, communication interface 204, at least one memory device 206, and/or the like, configured to transmit an SL PRS to a target TD via an associated SL channel connection between the first anchor TD and the target TD. In this regard, the first anchor TD (e.g., the TD 102a) can determine, based on one or more of the aforementioned techniques for determining the preferred resource allocation of the particular RB and/or the predetermined comb parameters, a preferred SL PRS configuration for transmitting the SL PRS to the target TD via the SL channel connection.

As described herein, an example embodiment of the present disclosure is able to facilitate the dynamic selection of resources used in transmitting SL PRSs based on a comb-level power sensing technique. An example embodiment provides improved RB sensing for resource reservation and allocation amongst multiple TDs connected via an SL channel connection by ensuring that one or more RBs are being fully utilized by ensuring that unused REs do not get overlooked. An example embodiment also provides reduced SL PRS interference by ensuring that one or more TDs connected via an SL channel are properly allocated available resources based on RE-level availability and not averaged measurements (e.g., such as PSSCH-RSRP and PSCCH-RSRP) taken across an entire RB.

It should be appreciated that the example embodiment described herein is not restricted to the system that is given as an example, such as a 5G system, and that a person skilled in the art may apply the solution to other communication systems. Additionally, although described herein in the context of a terminal device performing, the method, the method may be performed by other types of apparatus, such as an apparatus associated with and/or in communication with a terminal device, in accordance with other example embodiments.

Furthermore, implementations of the various techniques described herein may be implemented in digital electronic circuitry, or in computer hardware, firmware, software, or in combinations of them. Implementations may be implemented as a computer program product, e.g., a computer program tangibly embodied in an information carrier, e.g., in a machine-readable storage device or in a propagated signal, for execution by, or to control the operation of, a data processing apparatus, e.g., a programmable processor, a computer, or multiple computers. Implementations may also be provided on a computer readable medium or computer readable storage medium, which may be a non-transitory medium. Implementations of the various techniques may also include implementations provided via transitory signals or media, and/or programs and/or software implementations that are downloadable via the Internet or other network(s), either wired networks and/or wireless networks.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer, or it may be distributed amongst a number of computers.

A computer program, such as the computer program(s) described herein, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

It will be understood that each block of the flowchart(s) and combination of blocks in the flowchart(s) can be implemented by various means, such as hardware, firmware, processor, circuitry, and/or other communication devices associated with execution of software including one or more computer program instructions. For example, one or more of the procedures described herein can be embodied by computer program instructions. In this regard, the computer program instructions which embody the procedures described herein can be stored, for example, by the memory device 206 of the apparatus 200 or other apparatus employing an embodiment of the present disclosure and executed by the processing circuitry 202. As will be appreciated, any such computer program instructions can be loaded onto a computer or other programmable apparatus (for example, hardware) to produce a machine, such that the resulting computer or other programmable apparatus implements the functions specified in the blocks of the flowchart(s). These computer program instructions can also be stored in a computer-readable memory that can direct a computer or other programmable apparatus to function in a particular manner, such that the instructions stored in the computer-readable memory produce an article of manufacture the execution of which implements the function specified in the blocks of the flowchart(s). The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the blocks of the flowchart(s).

Accordingly, blocks of the flowchart(s) support combinations of means for performing the specified functions and combinations of operations for performing the specified functions for performing the specified functions. It will also be understood that one or more blocks of the flowchart(s), and combinations of blocks in the flowchart(s), can be implemented by special purpose hardware-based computer systems which perform the specified functions, or combinations of special purpose hardware and computer instructions.

In some embodiments, certain ones of the operations described herein may be modified or further amplified. Furthermore, in some embodiments, additional optional operations may be included. Modifications, additions, or amplifications to the operations described herein may be performed in any order and in any combination.

Many modifications and other embodiments of the present disclosure set forth herein will come to mind to one skilled in the art to which this disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An apparatus (102a, 102b, 200), comprising:
means for obtaining (204) a first power measurement associated with one or more resource blocks, RBs, being utilized by a terminal device;
means for determining (202) whether the first power measurement is equal to or below a first threshold, wherein the first threshold is associated with the one or more RBs;
means for transmitting (204), to a target terminal device, a positioning reference signal, PRS, via at least a portion of the one or more RBs in response to determining that the first power measurement is equal to or below the first threshold;
said apparatus **characterised by** comprising means for determining a first set of comb parameters in response to determining that the first power measurement is not equal to or below the first threshold;
means for obtaining, using the first set of comb parameters, a second power measurement, wherein the second power measurement is performed on one or more resource elements, REs, in the one or more RBs;
means for determining whether the second power measurement is equal to or below a second threshold, wherein the second threshold is associated with the one or more REs; and
means for transmitting, using the first set of comb parameters, the PRS to the target terminal device via at least a portion of the one or more REs in response to determining that the second power measurement is equal to or below the second threshold.

2. The apparatus of claim 1, wherein the apparatus further comprises:
means for determining a second set of comb parameters in response to determining that the second power measurement is not equal to or below the second threshold;
means for obtaining, using the second set of comb parameters, a third power measurement, wherein the third power measurement is performed on the one or more REs in the one or more RBs;
means for determining whether the third power measurement is equal to or below the second threshold associated with the one or more REs; and
means for transmitting, using the second set of comb parameters, the PRS to the target terminal device via at least a portion of the one or more REs in response to determining that the third power measurement is equal to or below the second threshold.

3. The apparatus of claim 2, wherein the apparatus further comprises:
means for determining at least one of the first set of comb parameters or the second set of comb parameters based at least in part on one of: a random sequence of comb parameter values, a predetermined sequence of comb parameter values, one or more portions of data associated with respective transmissions of one or more different terminal devices, or a condition of a channel used for transmitting the PRS, wherein at least one of the first set of comb parameters or the second set of comb parameters comprise at least one comb size value or comb offset value.

4. The apparatus of claim 2 or claim 3, wherein the apparatus further comprises:
means for receiving at least one of the first threshold associated with the one or more RBs or the second threshold associated with the one or more REs from at least one of a network node or one or more different terminal devices.

5. The apparatus of any of claims 2 to 4, wherein at least one of the first threshold associated with the one or more RBs or the second threshold associated with the one or more REs are based in part on one of:
one or more out-of-coverage operation preferences associated with the terminal device, one or more computational resources of the terminal device, or one or more predefined communication protocol specifications.

6. The apparatus of any of claims 2 to 5, wherein at least one of the first threshold associated with the one or more RBs or the second threshold associated with the one or more REs are configured using at least one of: a long term evolution, LTE, positioning protocol, LPP, a system information block, or radio resource control signaling.

7. The apparatus of any of claims 2 to 6, wherein the apparatus further comprises:
means for receiving at least one of the first threshold associated with the one or more RBs or the second threshold associated with the one or more REs via a sidelink, SL, positioning protocol, an SL radio resource control, or an SL broadcast signal.

8. The apparatus of any of claims 2 to 7, wherein the apparatus further comprises:
means for determining a success rate associated with one or more transmissions of the PRS to the target terminal device.

9. The apparatus of claim 8, wherein the apparatus further comprises:
means for modifying a respective value associated with the first threshold associated with the one or more RBs based on the success rate associated with the one or more transmissions of the PRS to the target terminal device, wherein the apparatus further comprises:
means for transmitting a modified respective value associated with the first threshold to the network node.

10. The apparatus of claim 8 or claim 9, wherein the apparatus further comprises:
means for mapping the respective value associated with the first threshold associated with the one or more RBs to the success rate associated with the one or more transmissions of the PRS to the target terminal device.

11. The apparatus of any of claims 2 to 10, wherein at least one of the first, second, or third respective power measurements are reference signal received power, RSRP, measurements, wherein the means to determine whether the first power measurement is equal to or below the first threshold associated with the one or more RBs further comprise means for determining whether the first power measurement is equal to or below a respective value associated with the first threshold associated with the one or more RBs, wherein the means to determine whether the second power measurement or the third power measurement is equal to or below the second threshold associated with the one or more REs further comprise means for determining whether the second power measurement or the third power measurement is equal to or below a respective value associated with the second threshold associated with the one or more REs.

12. The apparatus of any of claims 2 to 10, wherein the PRS is an SL PRS, wherein the apparatus further comprises means for indicating, to the target TD, an SL PRS configuration before transmitting the PRS to the target TD.

13. The apparatus of claim 1, wherein the apparatus further comprises:
means for obtaining a secondary power measurement in response to determining that the first power measurement is not equal to or below the first threshold associated with the one or more RBs but is equal to or below an auxiliary threshold, wherein the auxiliary threshold is also associated with the one or more RBs, wherein the secondary power measurement is performed on one or more REs in the one or more RBs;
means for determining whether the secondary power measurement performed on the one or more REs also is equal to or below the auxiliary threshold associated with the one or it more RBs;
means for transmitting the PRS to the target terminal device via at least one of the one or more RBs in response to determining that the secondary power measurement also is equal to or below the auxiliary threshold associated with the one or more RBs;
means for determining a plurality of comb parameters in response to determining that the secondary power measurement is not equal to or below the auxiliary threshold associated with the one or more RBs;
means for obtaining, using the plurality of comb parameters, a tertiary power measurement, wherein the tertiary power measurement is performed on one or more REs in the one or more RBs;
means for determining whether the tertiary power measurement is equal to or below a predefined threshold associated with the one or more REs; and
means for transmitting, using the plurality of comb parameters, the PRS to the target terminal device via at least one RE of the one or more REs in response to determining that the tertiary power measurement is equal to or below the predefined threshold.

14. A method (600) comprising:
obtaining (604) a first power measurement performed on one or more resource blocks, RBs, being utilized by a terminal device;
determining (606) whether the first power measurement is equal to or below a first threshold, wherein the first threshold is associated with the one or more RBs;
transmitting (608), to a target terminal device (102a, 102b, 200), a positioning reference signal, PRS, via at least a portion of the one or more RBs in response to determining that the first power measurement is equal to or below the first threshold;
said method **characterised by** determining (612) a first set of comb parameters in response to determining that the first power measurement is not equal to or below the first threshold;
obtaining (614), using the first set of comb parameters, a second power measurement, wherein the second power measurement is performed on one or more resource elements, REs, in the one or more RBs;
determining (616), whether the second power measurement is equal to or below a second threshold, wherein the second threshold is associated with the one or more REs; and
transmitting (618), using the first set of comb parameters, the PRS to the target terminal device via at least a portion of the one or more REs in response to determining that the second power measurement is equal to or below the second threshold.

## Patentansprüche

1. Vorrichtung (102a, 102b, 200), umfassend:
Mittel zum Erhalten (204) einer ersten Leistungsmessung, die einem oder mehreren Ressourcenblöcken, RBs, zugeordnet ist, die von einem Endgerät verwendet werden;
Mittel zum Bestimmen (202), ob die erste Leistungsmessung gleich oder unterhalb eines ersten Schwellenwerts liegt, wobei der erste Schwellenwert dem einen oder den mehreren RBs zugeordnet ist;
Mittel zum Übertragen (204) eines Positionierungsreferenzsignals, PRS, an ein Ziel-Endgerät über mindestens einen Teil des einen oder der mehreren RBs in Reaktion auf die Bestimmung, dass die erste Leistungsmessung gleich oder unterhalb des ersten Schwellenwerts liegt;
wobei die Vorrichtung **dadurch gekennzeichnet ist, dass** sie Mittel umfasst zum Bestimmen eines ersten Satzes von Kammparametern in Reaktion auf die Bestimmung, dass die erste Leistungsmessung nicht gleich oder unterhalb des ersten Schwellenwerts liegt;
Mittel zum Erhalten, unter Verwendung des ersten Satzes von Kammparametern, einer zweiten Leistungsmessung, wobei die zweite Leistungsmessung an einem oder mehreren Ressourcenelementen, REs, in dem einen oder den mehreren RBs durchgeführt wird;
Mittel zum Bestimmen, ob die zweite Leistungsmessung gleich oder unterhalb eines zweiten Schwellenwerts liegt, wobei der zweite Schwellenwert dem einen oder den mehreren REs zugeordnet ist; und
Mittel zum Übertragen, unter Verwendung des ersten Satzes von Kammparametern, des PRS an das Ziel-Endgerät über mindestens einen Teil des einen oder der mehreren REs in Reaktion auf die Bestimmung, dass die zweite Leistungsmessung gleich oder unterhalb des zweiten Schwellenwerts liegt.

2. Vorrichtung nach Anspruch 1, wobei die Vorrichtung ferner umfasst:
Mittel zum Bestimmen eines zweiten Satzes von Kammparametern in Reaktion auf die Bestimmung, dass die zweite Leistungsmessung nicht gleich oder unterhalb des zweiten Schwellenwerts liegt;
Mittel zum Erhalten, unter Verwendung des zweiten Satzes von Kammparametern, einer dritten Leistungsmessung, wobei die dritte Leistungsmessung an dem einen oder den mehreren REs in dem einen oder den mehreren RBs durchgeführt wird;
Mittel zum Bestimmen, ob die dritte Leistungsmessung gleich oder unterhalb des zweiten Schwellenwerts liegt, der dem einen oder den mehreren REs zugeordnet ist; und
Mittel zum Übertragen, unter Verwendung des zweiten Satzes von Kammparametern, des PRS an das Ziel-Endgerät über mindestens einen Teil des einen oder der mehreren REs in Reaktion auf die Bestimmung, dass die dritte Leistungsmessung gleich oder unterhalb des zweiten Schwellenwerts liegt.

3. Vorrichtung nach Anspruch 2, wobei die Vorrichtung ferner umfasst:
Mittel zum Bestimmen mindestens eines von dem ersten Satz von Kammparametern oder dem zweiten Satz von Kammparametern, zumindest teilweise basierend auf einem von: einer zufälligen Sequenz von Kammparameterwerten, einer vorbestimmten Sequenz von Kammparameterwerten, einem oder mehreren Datenabschnitten, die jeweiligen Übertragungen eines oder mehrerer verschiedener Endgeräte zugeordnet sind, oder einem Zustand eines Kanals, der zum Übertragen des PRS verwendet wird, wobei mindestens einer von dem ersten Satz von Kammparametern oder dem zweiten Satz von Kammparametern mindestens einen Kammgrößenwert oder einen Kammversatzwert umfasst.

4. Vorrichtung nach Anspruch 2 oder Anspruch 3, wobei die Vorrichtung ferner umfasst:
Mittel zum Empfangen mindestens eines von dem ersten Schwellenwert, der dem einen oder den mehreren RBs zugeordnet ist, oder dem zweiten Schwellenwert, der dem einen oder den mehreren REs zugeordnet ist, von mindestens einem von einem Netzwerkknoten oder einem oder mehreren verschiedenen Endgeräten.

5. Vorrichtung nach einem der Ansprüche 2 bis 4, wobei mindestens einer von dem ersten Schwellenwert, der dem einen oder den mehreren RBs zugeordnet ist, oder dem zweiten Schwellenwert, der dem einen oder den mehreren REs zugeordnet ist, zumindest teilweise basiert auf einem von: einer oder mehreren Betriebspräferenzen außerhalb der Abdeckung, die dem Endgerät zugeordnet sind, einer oder mehreren Rechenressourcen des Endgeräts, oder einer oder mehreren vordefinierten Kommunikationsprotokollspezifikationen.

6. Vorrichtung nach einem der Ansprüche 2 bis 5, wobei mindestens einer von dem ersten Schwellenwert, der dem einen oder den mehreren RBs zugeordnet ist, oder dem zweiten Schwellenwert, der dem einen oder den mehreren REs zugeordnet ist, unter Verwendung mindestens eines von konfiguriert sind: einer Langzeitentwicklung, LTE, einem Positionierungsprotokoll, LPP, einem Systeminformationsblock oder einer Funkressourcensteuerungssignalisierung.

7. Vorrichtung nach einem der Ansprüche 2 bis 6, wobei die Vorrichtung ferner umfasst:
Mittel zum Empfangen mindestens eines von dem ersten Schwellenwert, der dem einen oder den mehreren RBs zugeordnet ist, oder dem zweiten Schwellenwert, der dem einen oder den mehreren REs zugeordnet ist, über ein Sidelink-Positionierungsprotokoll, SL, eine SL-Funkressourcensteuerung oder ein SL-Rundfunksignal.

8. Vorrichtung nach einem der Ansprüche 2 bis 7, wobei die Vorrichtung ferner umfasst:
Mittel zum Bestimmen einer Erfolgsrate, die einer oder mehreren Übertragungen des PRS an das Ziel-Endgerät zugeordnet ist.

9. Vorrichtung nach Anspruch 8, wobei die Vorrichtung ferner umfasst:
Mittel zum Modifizieren eines jeweiligen Werts, der dem ersten Schwellenwert zugeordnet ist, der dem einen oder den mehreren RBs zugeordnet ist, basierend auf der Erfolgsrate, die der einen oder den mehreren Übertragungen des PRS an das Ziel-Endgerät zugeordnet ist, wobei die Vorrichtung ferner umfasst:
Mittel zum Übertragen eines modifizierten jeweiligen Werts, der dem ersten Schwellenwert zugeordnet ist, an den Netzwerkknoten.

10. Vorrichtung nach Anspruch 8 oder Anspruch 9, wobei die Vorrichtung ferner umfasst:
Mittel zum Zuordnen des jeweiligen Werts, der dem ersten Schwellenwert zugeordnet ist, der dem einen oder den mehreren RBs zugeordnet ist, zu der Erfolgsrate, die der einen oder den mehreren Übertragungen des PRS an das Ziel-Endgerät zugeordnet ist.

11. Vorrichtung nach einem der Ansprüche 2 bis 10, wobei mindestens eine von der ersten, der zweiten oder der dritten jeweiligen Leistungsmessung Referenzsignal-Empfangsleistungs-, RSRP-, Messungen sind, wobei die Mittel zum Bestimmen, ob die erste Leistungsmessung gleich oder unterhalb des ersten Schwellenwerts liegt, der dem einen oder den mehreren RBs zugeordnet ist, ferner Mittel zum Bestimmen umfassen, ob die erste Leistungsmessung gleich oder unterhalb eines jeweiligen Werts liegt, der dem ersten Schwellenwert zugeordnet ist, der dem einen oder den mehreren RBs zugeordnet ist, wobei die Mittel zum Bestimmen, ob die zweite Leistungsmessung oder die dritte Leistungsmessung gleich oder unterhalb des zweiten Schwellenwerts liegt, der dem einen oder den mehreren REs zugeordnet ist, ferner Mittel zum Bestimmen umfassen, ob die zweite Leistungsmessung oder die dritte Leistungsmessung gleich oder unterhalb eines jeweiligen Werts liegt, der dem zweiten Schwellenwert zugeordnet ist, der dem einen oder den mehreren REs zugeordnet ist.

12. Vorrichtung nach einem der Ansprüche 2 bis 10, wobei das PRS ein SL-PRS ist, wobei die Vorrichtung ferner Mittel zum Anzeigen, an das Ziel-TD, einer SL-PRS-Konfiguration vor dem Übertragen des PRS an das Ziel-TD umfasst.

13. Vorrichtung nach Anspruch 1, wobei die Vorrichtung ferner umfasst:
Mittel zum Erhalten einer sekundären Leistungsmessung in Reaktion auf die Bestimmung, dass die erste Leistungsmessung nicht gleich oder unterhalb des ersten Schwellenwerts liegt, der dem einen oder den mehreren RBs zugeordnet ist, aber gleich oder unterhalb eines Hilfsschwellenwerts liegt, wobei der Hilfsschwellenwert ebenfalls dem einen oder den mehreren RBs zugeordnet ist, wobei die sekundäre Leistungsmessung an einem oder mehreren REs in dem einen oder den mehreren RBs durchgeführt wird;
Mittel zum Bestimmen, ob die sekundäre Leistungsmessung, die an dem einen oder den mehreren REs durchgeführt wird, ebenfalls gleich oder unterhalb des Hilfsschwellenwerts liegt, der dem einen oder den mehreren RBs zugeordnet ist;
Mittel zum Übertragen des PRS an das Ziel-Endgerät über mindestens einen des einen oder der mehreren RBs in Reaktion auf die Bestimmung, dass die sekundäre Leistungsmessung ebenfalls gleich oder unterhalb des Hilfsschwellenwerts liegt, der dem einen oder den mehreren RBs zugeordnet ist;
Mittel zum Bestimmen einer Vielzahl von Kammparametern in Reaktion auf die Bestimmung, dass die sekundäre Leistungsmessung nicht gleich oder unterhalb des Hilfsschwellenwerts liegt, der dem einen oder den mehreren RBs zugeordnet ist;
Mittel zum Erhalten, unter Verwendung der Vielzahl von Kammparametern, einer tertiären Leistungsmessung, wobei die tertiäre Leistungsmessung an einem oder mehreren REs in dem einen oder den mehreren RBs durchgeführt wird;
Mittel zum Bestimmen, ob die tertiäre Leistungsmessung gleich oder unterhalb eines vordefinierten Schwellenwerts liegt, der dem einen oder den mehreren REs zugeordnet ist; und
Mittel zum Übertragen, unter Verwendung der Vielzahl von Kammparametern, des PRS an das Ziel-Endgerät über mindestens ein RE des einen oder der mehreren REs in Reaktion auf die Bestimmung, dass die tertiäre Leistungsmessung gleich oder unterhalb des vordefinierten Schwellenwerts liegt.

14. Verfahren (600), umfassend:
Erhalten (604) einer ersten Leistungsmessung, die an einem oder mehreren Ressourcenblöcken, RBs, durchgeführt wird, die von einem Endgerät verwendet werden;
Bestimmen (606), ob die erste Leistungsmessung gleich oder unterhalb eines ersten Schwellenwerts liegt, wobei der erste Schwellenwert dem einen oder den mehreren RBs zugeordnet ist;
Übertragen (608) eines Positionierungsreferenzsignals, PRS, an ein Ziel-Endgerät (102a, 102b, 200) über mindestens einen Teil des einen oder der mehreren RBs in Reaktion auf die Bestimmung, dass die erste Leistungsmessung gleich oder unterhalb des ersten Schwellenwerts liegt;
wobei das Verfahren **gekennzeichnet ist durch** Bestimmen (612) eines ersten Satzes von Kammparametern in Reaktion auf die Bestimmung, dass die erste Leistungsmessung nicht gleich oder unterhalb des ersten Schwellenwerts liegt;
Erhalten (614), unter Verwendung des ersten Satzes von Kammparametern, einer zweiten Leistungsmessung, wobei die zweite Leistungsmessung an einem oder mehreren Ressourcenelementen, REs, in dem einen oder den mehreren RBs durchgeführt wird;
Bestimmen (616), ob die zweite Leistungsmessung gleich oder unterhalb eines zweiten Schwellenwerts liegt, wobei der zweite Schwellenwert dem einen oder den mehreren REs zugeordnet ist; und
Übertragen (618), unter Verwendung des ersten Satzes von Kammparametern, des PRS an das Ziel-Endgerät über mindestens einen Teil des einen oder der mehreren REs in Reaktion auf die Bestimmung, dass die zweite Leistungsmessung gleich oder unterhalb des zweiten Schwellenwerts liegt.

## Revendications

1. Appareil (102a, 102b, 200), comprenant :
des moyens pour obtenir (204) une première mesure de puissance associée à un ou plusieurs blocs de ressources, RBs, utilisés par un dispositif terminal ;
des moyens pour déterminer (202) si la première mesure de puissance est égale ou inférieure à un premier seuil, dans lequel le premier seuil est associé au un ou plusieurs RBs ;
des moyens pour transmettre (204), à un dispositif terminal cible, un signal de référence de positionnement, PRS, via au moins une partie du un ou plusieurs RBs en réponse à la détermination que la première mesure de puissance est égale ou inférieure au premier seuil ;
ledit appareil **caractérisé en ce qu'**il comprend des moyens pour déterminer un premier ensemble de paramètres de peigne en réponse à la détermination que la première mesure de puissance n'est pas égale ou inférieure au premier seuil ;
des moyens pour obtenir, en utilisant le premier ensemble de paramètres de peigne, une deuxième mesure de puissance, dans lequel la deuxième mesure de puissance est effectuée sur un ou plusieurs éléments de ressource, REs, dans le un ou plusieurs RBs ;
des moyens pour déterminer si la deuxième mesure de puissance est égale ou inférieure à un deuxième seuil, dans lequel le deuxième seuil est associé au un ou plusieurs REs ; et
des moyens pour transmettre, en utilisant le premier ensemble de paramètres de peigne, le PRS au dispositif terminal cible via au moins une partie du un ou plusieurs REs en réponse à la détermination que la deuxième mesure de puissance est égale ou inférieure au deuxième seuil.

2. Appareil selon la revendication 1, dans lequel l'appareil comprend en outre :
des moyens pour déterminer un deuxième ensemble de paramètres de peigne en réponse à la détermination que la deuxième mesure de puissance n'est pas égale ou inférieure au deuxième seuil ;
des moyens pour obtenir, en utilisant le deuxième ensemble de paramètres de peigne, une troisième mesure de puissance, dans lequel la troisième mesure de puissance est effectuée sur le un ou plusieurs REs dans le un ou plusieurs RBs ;
des moyens pour déterminer si la troisième mesure de puissance est égale ou inférieure au deuxième seuil associé au un ou plusieurs REs ; et
des moyens pour transmettre, en utilisant le deuxième ensemble de paramètres de peigne, le PRS au dispositif terminal cible via au moins une partie du un ou plusieurs REs en réponse à la détermination que la troisième mesure de puissance est égale ou inférieure au deuxième seuil.

3. Appareil selon la revendication 2, dans lequel l'appareil comprend en outre :
des moyens pour déterminer au moins l'un du premier ensemble de paramètres de peigne ou du deuxième ensemble de paramètres de peigne sur la base au moins en partie de l'un parmi : une séquence aléatoire de valeurs de paramètres de peigne, une séquence prédéterminée de valeurs de paramètres de peigne, une ou plusieurs portions de données associées à des transmissions respectives d'un ou plusieurs dispositifs terminaux différents, ou un état d'un canal utilisé pour transmettre le PRS, dans lequel au moins l'un du premier ensemble de paramètres de peigne ou du deuxième ensemble de paramètres de peigne comprend au moins une valeur de taille de peigne ou une valeur de décalage de peigne.

4. Appareil selon la revendication 2 ou la revendication 3, dans lequel l'appareil comprend en outre :
des moyens pour recevoir au moins l'un du premier seuil associé au un ou plusieurs RBs ou du deuxième seuil associé au un ou plusieurs REs d'au moins l'un d'un nœud de réseau ou d'un ou plusieurs dispositifs terminaux différents.

5. Appareil selon l'une quelconque des revendications 2 à 4, dans lequel au moins l'un du premier seuil associé au un ou plusieurs RBs ou du deuxième seuil associé au un ou plusieurs REs sont basés au moins en partie sur l'un parmi : une ou plusieurs préférences de fonctionnement hors couverture associées au dispositif terminal, une ou plusieurs ressources de calcul du dispositif terminal, ou une ou plusieurs spécifications de protocole de communication prédéfinies.

6. Appareil selon l'une quelconque des revendications 2 à 5, dans lequel au moins l'un du premier seuil associé au un ou plusieurs RBs ou du deuxième seuil associé au un ou plusieurs REs sont configurés en utilisant au moins l'un parmi : une évolution à long terme, LTE, un protocole de positionnement, LPP, un bloc d'information système, ou une signalisation de contrôle de ressources radio.

7. Appareil selon l'une quelconque des revendications 2 à 6, dans lequel l'appareil comprend en outre :
des moyens pour recevoir au moins l'un du premier seuil associé au un ou plusieurs RBs ou du deuxième seuil associé au un ou plusieurs REs via un protocole de positionnement de liaison latérale, SL, un contrôle de ressources radio SL, ou un signal de diffusion SL.

8. Appareil selon l'une quelconque des revendications 2 à 7, dans lequel l'appareil comprend en outre :
des moyens pour déterminer un taux de succès associé à une ou plusieurs transmissions du PRS au dispositif terminal cible.

9. Appareil selon la revendication 8, dans lequel l'appareil comprend en outre :
des moyens pour modifier une valeur respective associée au premier seuil associé au un ou plusieurs RBs sur la base du taux de succès associé à la une ou plusieurs transmissions du PRS au dispositif terminal cible, dans lequel l'appareil comprend en outre :
des moyens pour transmettre une valeur respective modifiée associée au premier seuil au nœud de réseau.

10. Appareil selon la revendication 8 ou la revendication 9, dans lequel l'appareil comprend en outre :
des moyens pour mettre en correspondance la valeur respective associée au premier seuil associé au un ou plusieurs RBs avec le taux de succès associé à la une ou plusieurs transmissions du PRS au dispositif terminal cible.

11. Appareil selon l'une quelconque des revendications 2 à 10, dans lequel au moins l'une de la première, de la deuxième ou de la troisième mesure de puissance respective sont des mesures de puissance reçue de signal de référence, RSRP, dans lequel les moyens pour déterminer si la première mesure de puissance est égale ou inférieure au premier seuil associé au un ou plusieurs RBs comprennent en outre des moyens pour déterminer si la première mesure de puissance est égale ou inférieure à une valeur respective associée au premier seuil associé au un ou plusieurs RBs, dans lequel les moyens pour déterminer si la deuxième mesure de puissance ou la troisième mesure de puissance est égale ou inférieure au deuxième seuil associé au un ou plusieurs REs comprennent en outre des moyens pour déterminer si la deuxième mesure de puissance ou la troisième mesure de puissance est égale ou inférieure à une valeur respective associée au deuxième seuil associé au un ou plusieurs REs.

12. Appareil selon l'une quelconque des revendications 2 à 10, dans lequel le PRS est un PRS SL, dans lequel l'appareil comprend en outre des moyens pour indiquer, au TD cible, une configuration de PRS SL avant de transmettre le PRS au TD cible.

13. Appareil selon la revendication 1, dans lequel l'appareil comprend en outre :
des moyens pour obtenir une mesure de puissance secondaire en réponse à la détermination que la première mesure de puissance n'est pas égale ou inférieure au premier seuil associé au un ou plusieurs RBs mais est égale ou inférieure à un seuil auxiliaire, dans lequel le seuil auxiliaire est également associé au un ou plusieurs RBs, dans lequel la mesure de puissance secondaire est effectuée sur un ou plusieurs REs dans le un ou plusieurs RBs ;
des moyens pour déterminer si la mesure de puissance secondaire effectuée sur le un ou plusieurs REs est également égale ou inférieure au seuil auxiliaire associé au un ou plusieurs RBs ;
des moyens pour transmettre le PRS au dispositif terminal cible via au moins l'un du un ou plusieurs RBs en réponse à la détermination que la mesure de puissance secondaire est également égale ou inférieure au seuil auxiliaire associé au un ou plusieurs RBs ;
des moyens pour déterminer une pluralité de paramètres de peigne en réponse à la détermination que la mesure de puissance secondaire n'est pas égale ou inférieure au seuil auxiliaire associé au un ou plusieurs RBs ;
des moyens pour obtenir, en utilisant la pluralité de paramètres de peigne, une mesure de puissance tertiaire, dans lequel la mesure de puissance tertiaire est effectuée sur un ou plusieurs REs dans le un ou plusieurs RBs ;
des moyens pour déterminer si la mesure de puissance tertiaire est égale ou inférieure à un seuil prédéfini associé au un ou plusieurs REs ; et
des moyens pour transmettre, en utilisant la pluralité de paramètres de peigne, le PRS au dispositif terminal cible via au moins un RE du un ou plusieurs REs en réponse à la détermination que la mesure de puissance tertiaire est égale ou inférieure au seuil prédéfini.

14. Procédé (600) comprenant :
l'obtention (604) d'une première mesure de puissance effectuée sur un ou plusieurs blocs de ressources, RBs, utilisés par un dispositif terminal ;
la détermination (606) si la première mesure de puissance est égale ou inférieure à un premier seuil, dans lequel le premier seuil est associé au un ou plusieurs RBs ;
la transmission (608), à un dispositif terminal cible (102a, 102b, 200), d'un signal de référence de positionnement, PRS, via au moins une partie du un ou plusieurs RBs en réponse à la détermination que la première mesure de puissance est égale ou inférieure au premier seuil ;
ledit procédé **caractérisé par** la détermination (612) d'un premier ensemble de paramètres de peigne en réponse à la détermination que la première mesure de puissance n'est pas égale ou inférieure au premier seuil ;
l'obtention (614), en utilisant le premier ensemble de paramètres de peigne, d'une deuxième mesure de puissance, dans lequel la deuxième mesure de puissance est effectuée sur un ou plusieurs éléments de ressource, REs, dans le un ou plusieurs RBs ;
la détermination (616) si la deuxième mesure de puissance est égale ou inférieure à un deuxième seuil, dans lequel le deuxième seuil est associé au un ou plusieurs REs ; et
la transmission (618), en utilisant le premier ensemble de paramètres de peigne, du PRS au dispositif terminal cible via au moins une partie du un ou plusieurs REs en réponse à la détermination que la deuxième mesure de puissance est égale ou inférieure au deuxième seuil.
